# EUROPEAN PATENT APPLICATION

(11) **EP 2 865 582 A1**
(43) Date of publication of application: **29.04.2015**
(21) Application number: 13807662.5
(22) Date of filing: 14.06.2013
(51) Int. Cl.: B62D 25/20, B62D 29/04

(54) **FRP MEMBER**

(30) Priority: 22.06.2012 JP 2012140896; 22.06.2012 JP 2012140897; 10.07.2012 JP 2012154868; 31.07.2012 JP 2012169543
(71) Applicant: Toray Industries, Inc., Tokyo, 103-8666 (JP)
(72) Inventor: HASHIMOTO Kosaku, Nagoya-shi Aichi 455-8502 (JP); KIMOTO Yukitane, Nagoya-shi Aichi 455-8502 (JP); KURODA Yoshito, Nagoya-shi Aichi 455-8502 (JP); WAKABAYASHI Hiroki, Nagoya-shi Aichi 455-8502 (JP)
(74) Representative: Hoefer & Partner
(86) International application number: PCT/JP2013/066430
(87) International publication number: WO 2013/191093

(57) **Abstract**

An FRP member joined to a frame of a frame structure, the FRP member characterized by integral molding of a joint extending along an external peripheral surface of the frame and joined to the frame by adhesion, and a planar plate extending in a planar fashion from the joint. Mechanical properties of the entire frame structure joined with the FRP member, such as strength and rigidity, and shear stiffening property in particular, can be efficiently improved while the light weight of the entire frame structure is ensured and the number of assembly steps is reduced. In particular, an FRP member suitable for use in a vehicle frame structure can be provided.

## Description

### Technical Field of the Invention

The present invention relates to a panel-like FRP (Fiber Reinforced Plastic) member joined to a frame structure, and specifically, to an FRP member suitable for a vehicle.

### Background Art of the Invention

In various fields represented by a vehicle structure, various frame structures forming frame bodies are used. In a frame structure, an axial force of each frame (a force in a tensile/compressive direction of the frame) can be efficiently supported, since in order to support a shear deformation (shear or torsion in plane) of the entire frame structure, usually it is coped with increase of the number of frames, partial reinforcement of a frame joint corner, etc., problems such as increase of the number of components, increase of assembly steps, increase of weight, etc. may be caused.

In order to enhance a strength or a rigidity against a shear deformation of the entire frame structure, a method is considered for attaching a panel-like member to the frame structure. For example, in a sheet metal structure, there is a case where a metal plate component is attached to a metal frame and a shear deformation hard to be burdened only by the frame is shared by the plate component. However, spot welding is frequently employed for attachment of a frame and a plate component from easiness of the process, such an assembly structure is poor in structural efficiency, and the problem such as increase of weight has not been solved.

On the other hand, as a raw material capable of enhancing mechanical properties (strength, rigidity) while ensuring a light weight, an FRP, in particular, a CFRP (Carbon fiber reinforced plastic), is known. For example, it is proposed to form a vehicle floor structure as a CFRP monocoque structure, although such a structure becomes a best-performance floor structure having a high function and suitable for a small production and it is possible to apply it to a best-type vehicle, it is difficult to apply it to generalized vehicles having a large market (for example, Patent document 1). Thus, with respect to a frame structure for vehicles and the like, in particular, with respect to a frame structure for generalized vehicles, there is almost no example in that a panel-like FRP member is applied in order to enhance strength or rigidity against shear deformation. However, there is an example in that simply a synthetic resin material is bonded to a vehicle frame structure (for example, Patent document 2). In any of a metal structure and a n FRP structure, there is a case where a frame structure already present or to be designed from now exists and it is required to reinforce and stiffen the frame structure easily and efficiently, and for example, there is a case where an additional structure is required which can provide desirable strength and rigidity to the entire structure without accompanying a great increase in weight, by easy and efficient reinforcing and stiffening realized by a partial reinforcement for a frame joint corner portion.

### Prior art documents

### Patent documents

Patent document 1: JP-A-2012-56354
Patent document 2: JP-A-HEI-10-45027

### Summary of the Invention

### Problems to be solved by the Invention

Accordingly, an object of the present invention is to provide a panel-like FRP member which is joined to a frame structure in order to enhance mechanical properties such as strength and rigidity while ensuring the light weight of the entire frame structure, in particular, to provide an FRP member suitable for use in a vehicle frame structure.

### Means for solving the Problems

To achieve the above-described object, an FRP member according to the present invention, is joined to a frame of a frame structure, and is characterized in that a joint portion extending along an external peripheral surface of the frame and joined to the frame by adhesion, and a planar plate portion extending in a planar fashion from the joint portion, are integrally molded.

In such an FRP member according to the present invention, since the joint portion is formed in a shape extending along the external peripheral surface of the frame and this joint portion is joined to the frame by adhesion, as compared with the conventional case joined by spot welding and the like, the joining can be facilitated, and because it becomes possible to join the portion to be joined continuously over the entire surface, an extremely high joining strength between both members can be obtained. Further, by the condition where the joint portion to be joined to the frame is formed in a shape extending along the external peripheral surface of the frame, the joint portion can easily have a stiffener function relatively to the frame. Since the planar plate portion extends in a planar fashion from the joint portion thus joined strongly to the frame of the frame structure and the planar plate portion is molded integrally with the joint portion, it becomes possible that the planar plate portion exhibits high strength and rigidity against a load transmitted from the frame of the frame structure through the joint portion, in particular, against a shear load. As a result, in a state joined with the FRP member according to the present invention, while the light weight of the entire frame structure is ensured, it becomes possible to efficiently improve mechanical properties such as strength and rigidity against shear deformation.

In the above-described FRP member according to the present invention, it is preferred that a space is defined by the above-described joint portion and the planar plate portion. If such a space is defined, because a reinforcement means for the planar plate portion can be disposed in the space, it becomes possible to further enhance the performance of the structure for burdening a shear load of the planar plate portion.

Further, it is preferred that the above-described joint portion has a stiffener function for reinforcing the above-described frame, or/and, has a stiffener component for reinforcing the above-described frame. Namely, a stiffener function for the frame may be given to the joint portion itself which is formed in a shape extending along the external peripheral surface of the frame, and further, a stiffener component may be provided separately from the joint portion itself which extends along the external peripheral surface of the frame.

Further, a formation is also preferred wherein a flat portion for attachment of another component is provided to the outer surface of the above-described joint portion. In such a structure, another component can be easily attached onto the above-described flat portion, and a surrounding structure can also be considered easily.

Further, a structure can also be employed wherein an abutting portion for regulating a coating thickness of an adhesive provided to the above-described joint portion is provided to the joint portion or a part covering the joint portion. This abutting portion can be constructed as one formed by the FRP member itself, one provided to the FRP member and abutting with the frame, etc., and for example, the abutting portion can be formed by a rib or a seat described later, or the abutting portion can be formed by providing a spacer as another component. In such a structure, it becomes possible to control the coating thickness of an adhesive at a more adequate coating thickness, and it can contribute to optimization, uniformization, etc. of the joining strength.

Further, a structure can also be employed wherein a groove capable of holding an adhesive is provided to the above-described joint portion, for example, to a surface of the joint portion facing the above-described frame. In such a structure, because an adequate amount of adhesive can be held along the groove, it becomes possible to easily achieve an adhesion strength of a desirable level or more for the adhesion part.

Further, a structure can also be employed wherein at least any one of an injection path and a filling path for an adhesive is provided to the above-described joint portion, for example, to a surface of the joint portion facing the above-described frame (namely, to a surface of the joint portion to be joined to the above-described frame). In such a structure, even in case where the joint portion extends relatively long along the frame, an adhesive can be easily injected or filled relatively to a predetermined joining part, and therefore, a desired joint state can be easily obtained.

Further, a structure can also be employed wherein reinforcing fibers of an FRP in the above-described planar plate portion are oriented at least in ±45° directions relative to a reference direction. In such a structure, a shear strength in plane in the planar plate portion can be efficiently enhanced by the orientation of reinforcing fibers in ±45° directions, and therefore, a structure having a desirable shear stiffening property in plane can be obtained.

Further, a structure can also be employed wherein a rib or/and a stiffener are integrally provided to the above-described planar plate portion or the planar plate portion and the joint portion. In such a structure, the strength and the rigidity of the planar plate portion or the planar plate portion and the joint portion are further enhanced by the rib or/and the stiffener, and depending upon the extension direction of the rib or/and the stiffener, the above-described shear stiffening property in plane can be further enhanced.

In particular, it is preferred that the rib or/and the stiffener are formed integrally with the planar plate portion in the above-described space defined by the joint portion and the planar plate portion. In such a structure, because it is possible to contain the rib or/and the stiffener efficiently within the installation space of the FRP member, the mechanical properties can be efficiently enhanced without greatly increasing the installation space.

In the above-described structure having the rib or/and the stiffener, it is possible to employ a structure wherein the above-described rib or/and the stiffener form a support surface for an external component. For example, it is possible to form a support surface for an external component utilizing a top surface of the rib or/and the stiffener. In such a structure, it becomes possible to form a support surface for an external component without particularly increasing the number of components, and further, a particular space for forming a support surface also becomes unnecessary.

Further, in the FRP member according to the present invention, reinforcing fibers of FRP are not particularly restricted, and although various reinforcing fibers can be used such as carbon fibers, glass fibers, aramide fibers, further, a combination of these, etc., in particular, it is preferred to use carbon fibers high in reinforcement effect and easy in designing and molding.

It is possible to apply such an FRP member according to the present invention to frame structures having various configurations. For example, a formation can be exemplified wherein the FRP member is formed as a corner joint component provided at a corner portion of a frame structure having a frame joint end at which the frames are joined to each other, the FRP member has joint portions joined respectively to at least two frames, joined to each other, by adhesion at positions each distanced from the frame joint end and a planar plate portion extending in a planar fashion from the respective joint portions, and the joint portions and the planar plate portion are formed by integral molding.

In such a formation, by joining by adhesion the corner joint component comprising an integrally molded FRP member to the corner portion of the frame structure having the frame joint end, in particular, against a shear deformation in that the frame structure is weak, it becomes possible to be supported by a shear stress of an adhesion surface due to the adhesion at the joint portion, and to be supported by a shear stiffening structure in plane at a planar structure part of the planar plate portion. In particular, because the joint portions are joined respectively to at least two frames by adhesion at positions each distanced from the frame joint end, the frame joint end, which may become difficult in shape to be joined by adhesion, can be intentionally shifted from the adhesion joining location, and the adhesion joining of the joint portions can be carried out easily. Further, by the adhesion joining of the joint portions at positions distanced from the frame joint end, even in case where a moment or a shear stress caused by the moment is applied in view of the frame joint end being referred to as a reference position, the arm length of the drag against the moment can be ensured, it becomes possible to exhibit a high drag by cooperation of the joint portions and the planar plate portion molded integrally with the joint portions, and an excellent reinforcing and stiffening structure can be realized particularly against shear deformation. Since such an excellent reinforcing and stiffening structure can be realized substantially only by adhesion joining the FRP member provided as the above-described corner joint component, targeted reinforcing and stiffening can be carried out extremely easily and effectively, and in addition, because this corner joint component is formed from an FRP, a great increase in weight is not accompanied.

Where, also in the above-described formation, the material of the frames themselves of the frame structure, which has the corner portion having the frame joint end joined with the frames to each other, is not particularly restricted, it may be a metal, or may be a resin or a fiber reinforced resin. If the FRP member as the above-described corner joint component is adhesion joined to a resin or fiber reinforced resin frame structure, a light weight as the whole of the frame structure after joining can be easily realized.

Further, in the above-described formation, it is preferred to employ a structure wherein each of the above-described joint portions has standing walls extending in parallel to each other at both sides of each of the frames at a condition where the FRP member as the corner joint component is provided at the above-described corner portion. In such a structure, only by inserting the corner joint component in a direction along the extension direction of the standing walls relatively to the corner portion of the frame structure, the joint portions of the corner joint component can be portioned easily and precisely at desirable positions relative to the frames, and therefore, the installation of the corner joint component can be facilitated.

Further, it is preferred that each of the above-described joint portions has a function for reinforcing the frame joined with it by adhesion. Namely, as aforementioned, although a shear stress of an adhesion surface due to adhesion is exhibited at the joint portion, at the same time, it is preferred that the frame becoming an integral structure by adhesion is also reinforced.

Further, it is preferred that the above-described planar plate portion has at least a function for stiffening the above-described corner portion. Namely, as aforementioned, since it becomes possible to be supported by the shear stiffening structure in plane at a planar structure part of the planar plate portion against a shear deformation of the frame structure, it is preferred that the planar plate portion sufficiently has such a stiffening function at the corner portion.

Further, a structure can be employed wherein at least a part of the outer surface of the above-described FRP member is formed as a flat surface. In such a structure, it becomes possible to utilize the above-described flat surface as an attachment portion for another component or a seal surface.

Furthermore, it is possible to apply the FRP member according to the present invention to a frame structure in various fields. In particular, if the FRP member according to the present invention is applied to a vehicle frame structure, desirable effect for lightening in weight and effect for reinforcement, required strongly, can be achieved securely.

Further, in the present invention, although the material of the frame itself of the frame structure is not particularly restricted as described above, if the frame is formed from an FRP, it becomes possible to further reduce the weight of the entire structure including this frame structure and the FRP member according to the present invention.

### Effect according to the Invention

Thus, in the FRP member according to the present invention, while the light weight of the entire frame structure is ensured, and while the number of assembly steps is reduced, the mechanical properties such as strength and rigidity of the entire frame structure joined with the FRP member, in particular, the shear stiffening property, can be enhanced efficiently, and in particular, an FRP member suitable for use in a vehicle frame structure can be provided.

### Brief explanation of the drawings

[Fig. 1] Fig. 1 is a perspective view of a structure whose frames are joined with an FRP member according to an embodiment of the present invention.
[Fig. 2] Fig. 2 is an enlarged partial vertical sectional view of the structure depicted in Fig. 1 as viewed along the line A-A of Fig. 1.
[Fig. 3] Fig. 3 is a partial perspective view showing an example of a structure provided with a stiffener to an FRP member having a corner portion.
[Fig. 4] Fig. 4 is an enlarged partial vertical sectional view of the structure depicted in Fig. 3 as viewed along the line B-B of Fig. 3.
[Fig. 5] Fig. 5 is a partial vertical sectional view showing another example different from Fig. 4 of a structure provided with a stiffener to an FRP member having a corner portion.
[Fig. 6] Fig. 6 is a partial perspective view showing an example of a structure provided with a stiffener to an FRP member having a flat surface portion.
[Fig. 7] Fig. 7 is an enlarged partial vertical sectional view of the structure depicted in Fig. 6 as viewed along the line C-C of Fig. 6.
[Fig. 8] Fig. 8 is a partial vertical sectional view showing another example different from Fig. 6 of a structure provided with a stiffener to an FRP member having a flat surface portion.
[Fig. 9] Fig. 9 is a vertical sectional view showing a modification of the structure depicted in Fig. 1 as viewed along the line D-D of Fig. 1.
[Fig. 10] Fig. 10 is a partial perspective view showing another modification of the structure depicted in Fig. 1.
[Fig. 11] Fig. 11 is a partial perspective view showing a further modification of the structure depicted in Fig. 1.
[Fig. 12] Fig. 12 is a perspective view showing an example of orientation of reinforcing fibers of a planar plate portion in the structure depicted in Fig. 1.
[Fig. 13] Fig. 13 is a perspective view showing an example in which a rib is provided to the structure depicted in Fig. 1.
[Fig. 14] Fig. 14 is a perspective view showing an example in which a stiffener is provided to the structure depicted in Fig. 1.
[Fig. 15] Fig. 15 is a perspective view showing an example in which a cover is added to the structure depicted in Fig. 1.
[Fig. 16] Fig. 16 is a schematic vertical sectional view of the structure depicted in Fig. 15 as viewed along the line E-E of Fig. 15.
[Fig. 17] Fig. 17 is a perspective view of a corner joint component comprising an FRP member according to an embodiment of the present invention.
[Fig. 18] Fig. 18 is a sectional view of the corner joint component depicted in Fig. 17 as viewed along the line A-A of Fig. 17.
[Fig. 19] Fig. 19 is a sectional view of a corner joint component according to a modification of Fig. 18.
[Fig. 20] Fig. 20 is a sectional view of a corner joint component according to another modification of Fig. 18.
[Fig. 21] Fig. 21 is a partial sectional view showing a structure example of a joint portion as viewed along the line B-B of Fig. 17.
[Fig. 22] Fig. 22 is a perspective view of a corner joint component showing an example providing a groove to the structure depicted in Fig. 17.
[Fig. 23] Fig. 23 is a perspective view of a corner joint component showing an example providing an injection path and a filling path to the structure depicted in Fig. 17.
[Fig. 24] Fig. 24 is a perspective view showing an example of orientation of reinforcing fibers of a planar plate portion of a corner joint component.
[Fig. 25] Fig. 25 is a perspective view showing an example providing a rib to a corner joint component.
[Fig. 26] Fig. 26 is a perspective view showing an example providing a stiffener to a corner joint component.
[Fig. 27] Fig. 27 is a perspective view showing an example of an insertion/attachment structure of a corner joint component.
[Fig. 28] Fig. 28 is a perspective view showing another example of an insertion/attachment structure of a corner joint component.
[Fig. 29] Fig. 29 is a perspective view showing a further example of an insertion/attachment structure of a corner joint component.
[Fig. 30] Fig. 30 is a perspective view showing a still further example of an insertion/attachment structure of a corner joint component.
[Fig. 31] Fig. 31 is an exploded perspective view of a floor structure using an FRP member according to an embodiment of the present invention.
[Fig. 32] Fig. 32 is an enlarged partial perspective view of the portion Y of the structure depicted in Fig. 31.
[Fig. 33] Fig. 33 is a perspective view showing an example of orientation of reinforcing fibers of a planar plate portion in a floor structure.
[Fig. 34] Fig. 34 is a perspective view showing an example providing a rib to a floor structure equal to that depicted in Fig. 33.
[Fig. 35] Fig. 35 is a perspective view showing an example providing a stiffener to a floor structure equal to that depicted in Fig. 33.
[Fig. 36] Fig. 36 is a perspective view showing an example providing a rib extending in a different direction from that in Fig. 34 to the floor structure depicted in Fig. 34.
[Fig. 37] Fig. 37 is a perspective view showing an example providing a stiffener extending in a different direction from that in Fig. 35 to the floor structure depicted in Fig. 35.
[Fig. 38] Fig. 38 is an exploded perspective view of a vehicle side panel structure using an FRP member according to an embodiment of the present invention.
[Fig. 39] Fig. 39 is an enlarged partial perspective view of the portion Z of the structure depicted in Fig. 38.
[Fig. 40] Fig. 40 is a partial elevational view of the structure depicted in Fig. 39 as viewed along the arrow Y of Fig. 39.
[Fig. 41] Fig. 41 is an enlarged partial sectional view of the structure depicted in Fig. 39 as viewed along the line A-A of Fig. 39.
[Fig. 42] Fig. 42 is a partial sectional view of a structure according to a modification of the structure depicted in Fig. 41.
[Fig. 43] Fig. 43 is a partial sectional view of a structure according to another modification of the structure depicted in Fig. 41.
[Fig. 44] Fig. 44 is a partial sectional view showing an example of a structure part as viewed along the line C-C of Fig. 38.
[Fig. 45] Fig. 45 is a perspective view showing an example of orientation of reinforcing fibers of an FRP member in the structure depicted in Fig. 38.
[Fig. 46] Fig. 46 is a perspective view showing an example providing a rib to an FRP member in the structure depicted in Fig. 38.
[Fig. 47] Fig. 47 is a perspective view showing an example providing a stiffener to an FRP member in the structure depicted in Fig. 38.

### Embodiments for carrying out the Invention

Hereinafter, embodiments of the present invention will be explained referring to figures.

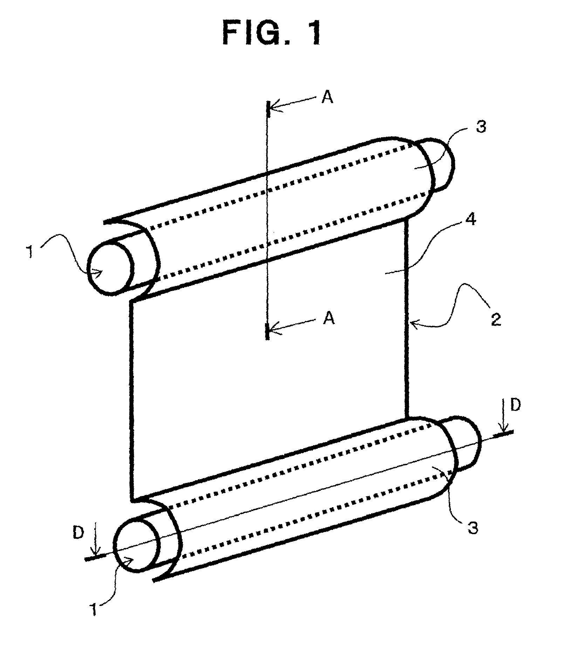

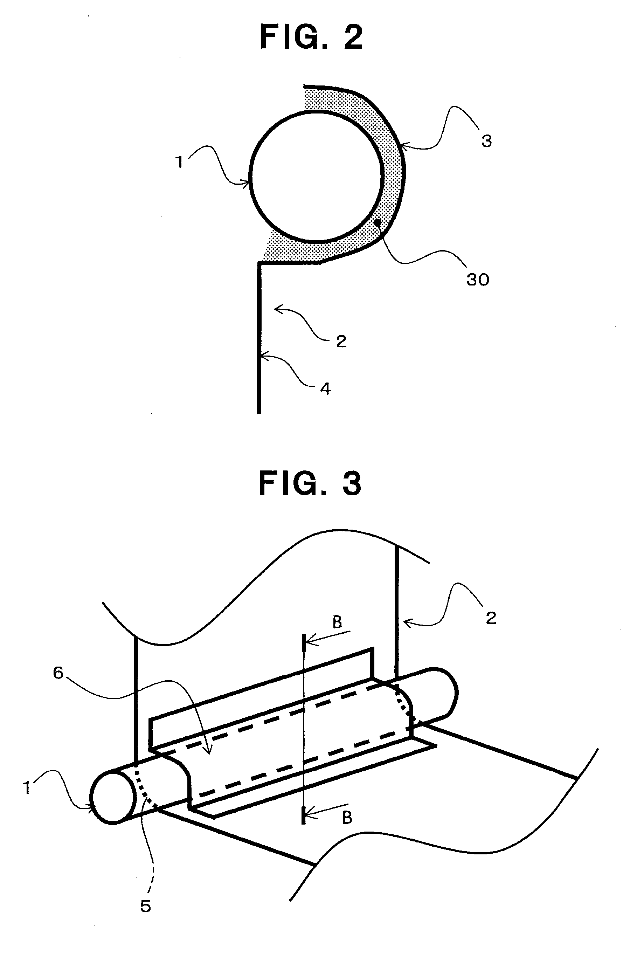

Fig. 1 shows a structure whose frames are joined with a panel-like FRP member according to an embodiment of the present invention. In Fig. 1, symbol 1 shows a frame of a frame structure, and a panel-like FRP member 2 according to an embodiment of the present invention is joined to frames 1 arranged at upper and lower positions in the figure. FRP member 2 extends along the external peripheral surfaces of the frames 1 each having a circular cross-sectional shape, and it is formed by integral molding of joint portions 3 each joined to each frame 1 by adhesion using an adhesive 30 as shown in Fig. 2, and a planar plate portion 4 extending in a planar fashion from the joint portion 3, in the embodiment shown in the figure, extending between the two joint portions 3.

In such an embodiment, as aforementioned, since joint portion 3 formed in the shape extending along the external peripheral surface of frame 1 is joined to the frame 1 by adhesion, as compared with the conventional case joined by spot welding and the like, the joining can be facilitated. Further, because it becomes possible to join the portion to be joined over the entire surface, an extremely high joining strength can be obtained. Further, by the condition where joint portion 3 to be joined to frame 1 is formed in an arc shape in cross section extending along the external peripheral surface of the frame 1, the joint portion 3 can easily have a stiffener function relatively to the frame 1. Therefore, joint portion 3 can be strongly joined to frame 1 as well as can strongly support planar plate portion 4 extending in a planar fashion from this joint portion 3 and integrally molded with the joint portion 3, and in addition, a load from the joint portion 3 can be transmitted to the planar plate portion 4 securely. This planar plate portion 4 extending in a planar fashion can exhibit high strength and rigidity against a load transmitted from frame 1 of the frame structure through joint portion 3, in particular, against a shear load. Therefore, at the formation joined with FRP member 2, it becomes possible to efficiently enhance the mechanical properties such as strength and rigidity against a shear deformation and the like, while ensuring the light weight of the entire frame structure.

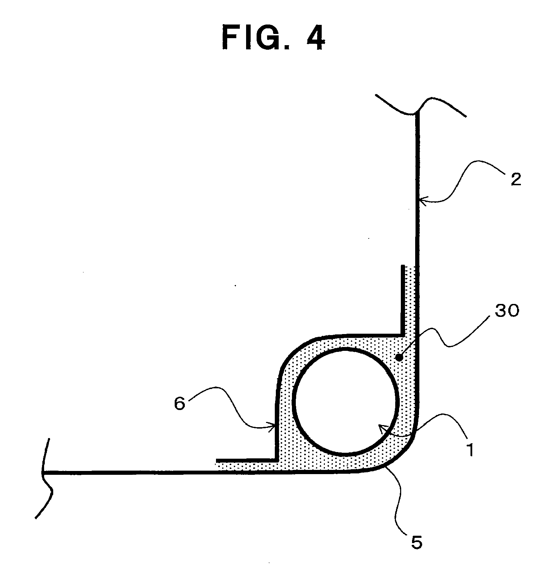

Figs. 3 and 4 show an example of a structure provided with a stiffener in case where FRP member 2 has a corner portion. In the example shown in the figures, a corner portion 5 of FRP member 2 extends along the external peripheral surface of frame 1 in an arc sectional shape and the corner portion 5 is joined by adhesive 30, a stiffener 6 is provided so as to cover this joint portion, and this stiffener 6 is also joined to the FRP member 2 and the frame 1 by the adhesive 30. By providing such a stiffener 6, particularly the strength and rigidity at the joint portion of corner portion 5 is greatly increased.

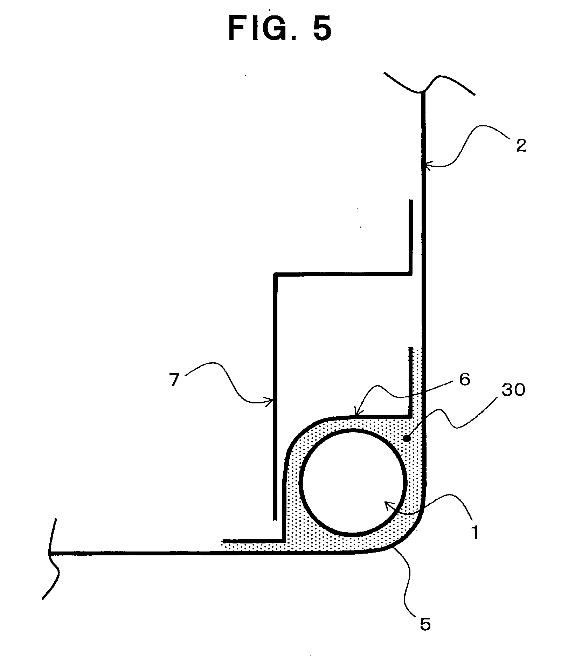

Fig. 5 shows another example different from Fig. 4 of a structure provided with a stiffener to an FRP member having a corner portion. In the example shown in the figure, as compared with the structure shown in Fig. 4, a stiffener 7 is further provided. As to this stiffener 7, although it is possible to employ a joining manner other than adhesion, it is also preferred to employ a joining manner due to adhesion.

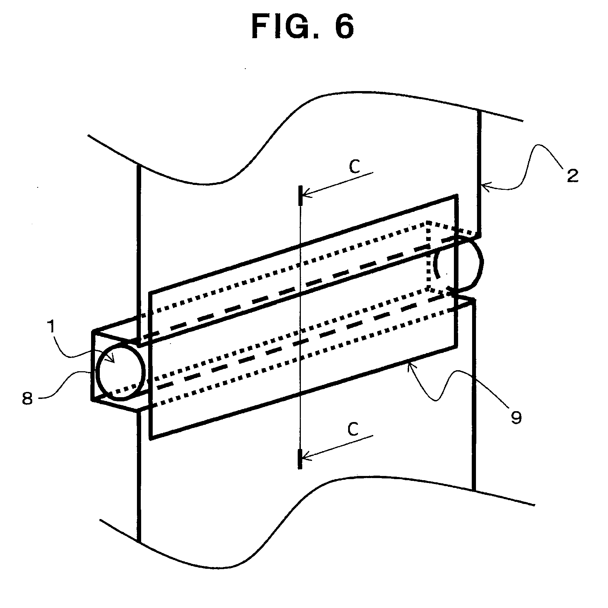

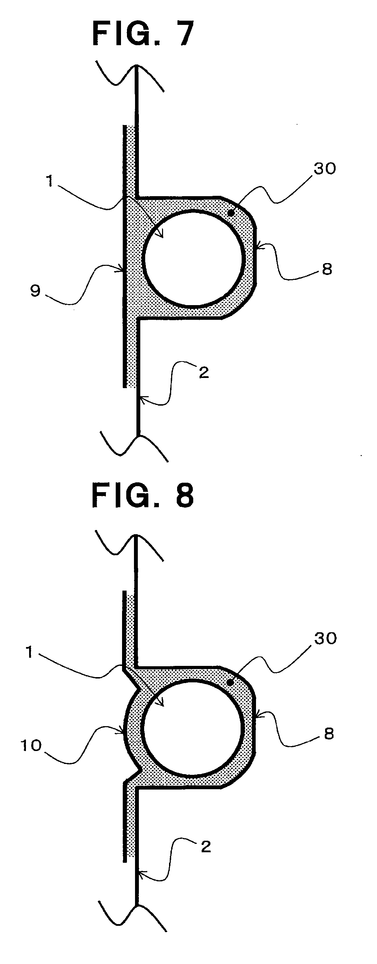

Figs. 6 and 7 show an example of a structure provided with a stiffener to an FRP member having a flat surface portion. In the example shown in the figures, a joint portion 8 joined to frame 1 is provided to the flat surface portion of FRP member 2, and the joint portion 8 is formed in a schematic C-shape in cross section so as to surround the frame 1. This joint portion 8 is joined to frame 1 by adhesion due to adhesive 30, a stiffener 9 is provided so as to cover this joint portion from the side of the flat surface portion of FRP member 2, and this stiffener 9 is also joined to the FRP member 2 and the frame 1 by the adhesive 30. By providing such a stiffener 9, the strength and rigidity of the joint structure at joint portion 8 formed in the flat surface portion of FRP member 2 can be greatly enhanced.

Fig. 8 shows another example different from Fig. 7 of a structure provided with a stiffener to an FRP member having a flat surface portion. In the example shown in the figure, as compared with the structure shown in Fig. 7, a stiffener 10 having a shape partially curved is provided so as to cover the joint portion from the side of the flat surface portion of FRP member 2. By thus shaping stiffener 10 formed by appropriately being deformed, when the stiffener 10 is joined by adhesion, it becomes possible to control the thickness of the layer of adhesive 30 more adequately. Therefore, this stiffener 10 is utilized also as means for regulating the coating thickness of adhesive 30.

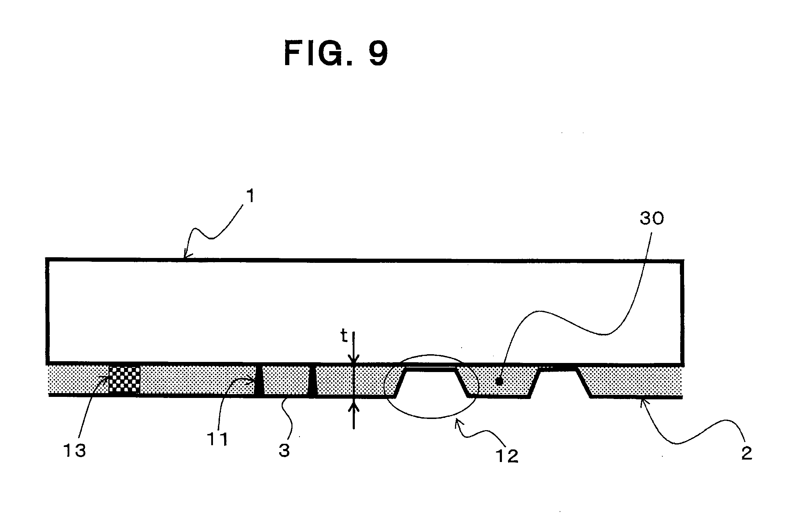

Fig. 9 shows a modification of the structure depicted in Fig. 1 as viewed along the line D-D of Fig. 1. In the example shown in the figure, to FRP member 2, in particular, to the frame 1 side of joint portion 3 of the member, provided are a rib 11 as an abutted portion for regulating the coating thickness of the adhesive, and a seat 12 projected in a convex shape toward the frame 1 so as to be able to come into contact with the frame 1, and further, a spacer 13 as a separate component between the joint portion 3 and the frame 1, and the gap between the member and the frame 1 can be regulated via these rib 11, seat 12 and spacer 13. In such a structure, by regulating the gap between the member and the frame 1 via rib 11, seat 12 and spacer 13, it becomes possible to regulate the coating thickness "t" of adhesive 30 at a desirable coating thickness, and while a predetermined adhesion strength is ensured, the amount of used adhesive can be suppressed.

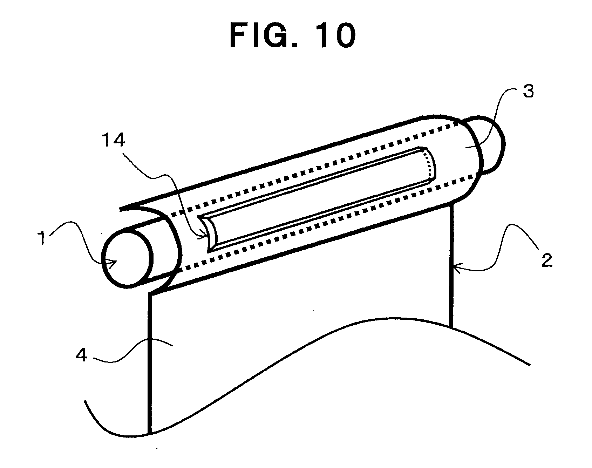

Fig. 10 shows another modification of the structure depicted in Fig. 1. In the example shown in the figure, a groove 14 depressed in a concave shape and capable of holding an adhesive is provided to the surface of joint portion 3 facing frame 1. In such a structure, because an adequate amount of adhesive can be held in groove 14, an adhesion strength of a desired level or more can be easily ensured for the adhesion portion.

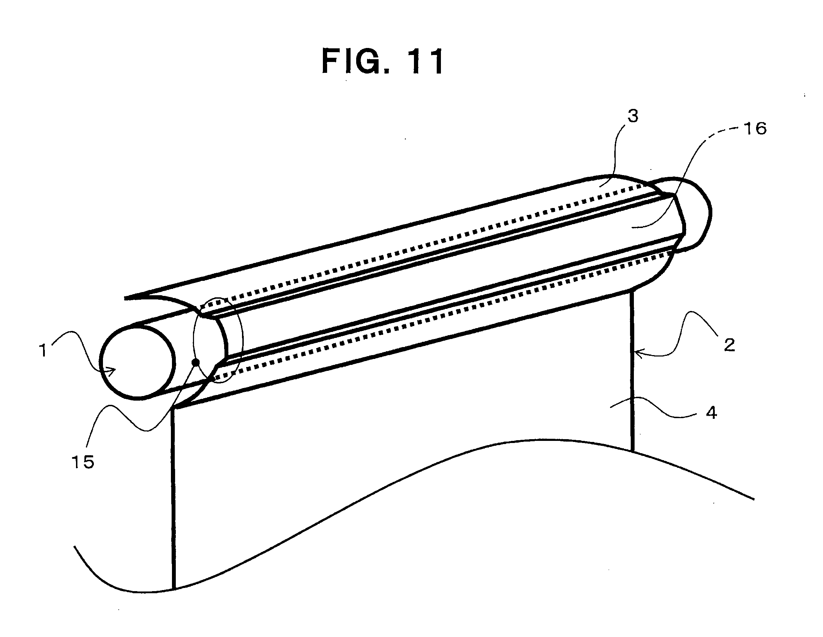

Fig. 11 shows a further modification of the structure depicted in Fig. 1. In the example shown in the figure, a filling path 16 for an adhesive comprising a groove depressed in a concave shape and capable of holding the adhesive is provided to the surface of joint portion 3 facing frame 1, and an injection path 15 for the adhesive is formed by opening the filling path 16 at its end. In such a structure, even in case where joint portion 3 extends relatively long in the longitudinal direction of frame 1, it becomes possible to inject and fill the adhesive easily over the entire length of the joint portion 3, and a desired joint state can be obtained more easily.

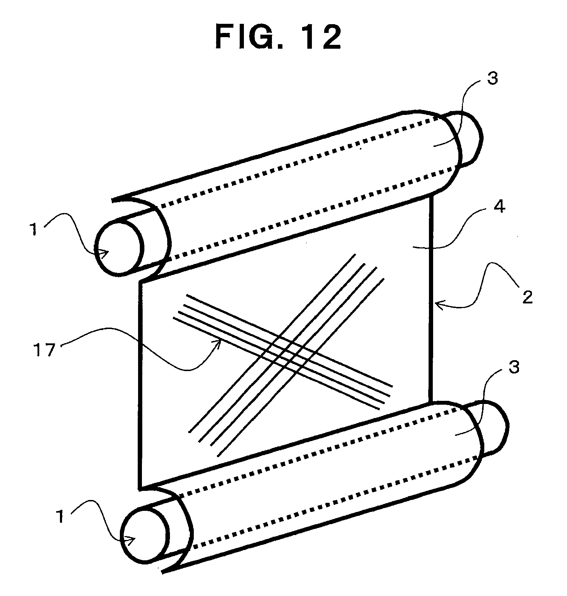

Fig. 12 shows an example of orientation of reinforcing fibers 17 of planar plate portion 4 of the structure depicted in Fig. 1. As shown in the figure, it is preferred that, in the FRP in planar plate portion 4, reinforcing fibers 17 are oriented at least in ±45° directions relative to a reference direction (a vertical direction or a lateral direction in the figure). Since it is desired that in particular a shear load is efficiently received in planar plate portion 4, by employing such a structure, the shear strength in plane of the planar plate portion 4 can be efficiently enhanced, and a desirable shear stiffening structure in plane can be obtained.

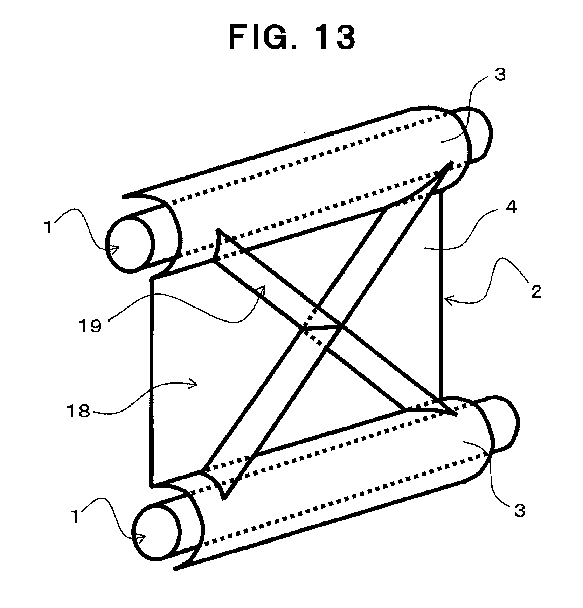

Fig. 13 shows an example in which in the structure depicted in Fig. 1, a rib 19 is provided, in particular, to space 18 defined by joint portion 3 and planar plate portion 4. Rib 19 is provided, for example, so as to be crossed in approximate ±45° directions, and is molded integrally with FRP member 2. In such a structure, in particular, the strength and rigidity of planar plate portion 4 are further enhanced by rib 19, and by adequately setting the extension direction of the rib 19, the shear stiffening property in plane can be further enhanced. Further, by providing rib 19 in space 18 defined by joint portion 3 and planar plate portion 4, because it can be contained within the installation space of FRP member 2, desirable mechanical properties can be enhanced efficiently without particularly increasing the installation space.

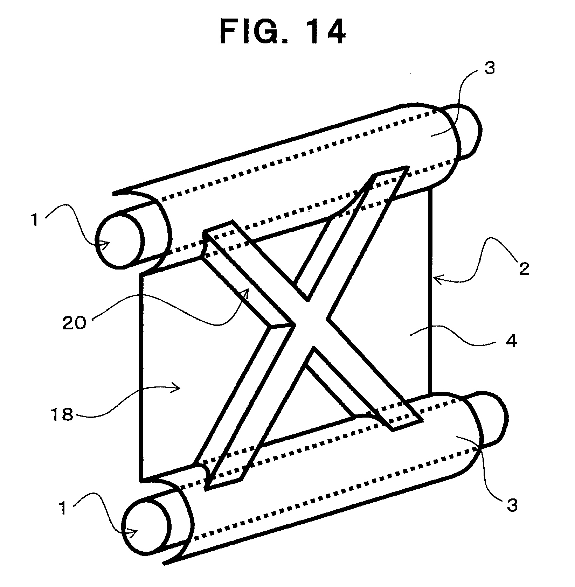

Fig. 14 shows an example in which in the structure depicted in Fig. 1, a stiffener 20 is provided, in particular, to space 18 defined by joint portion 3 and planar plate portion 4 in a manner similar to that shown in Fig. 13. Stiffener 20 is provided, for example, so as to be crossed in approximate ±45° directions, and is molded integrally with FRP member 2. Also in such a structure, in particular, the strength and rigidity of planar plate portion 4 are further enhanced by stiffener 20, and by adequately setting the extension direction of the stiffener 20, the shear stiffening property in plane can be further enhanced. Further, by providing stiffener 20 in space 18 defined by joint portion 3 and planar plate portion 4, because it can be contained within the installation space of FRP member 2, desirable mechanical properties can be enhanced efficiently without particularly increasing the installation space.

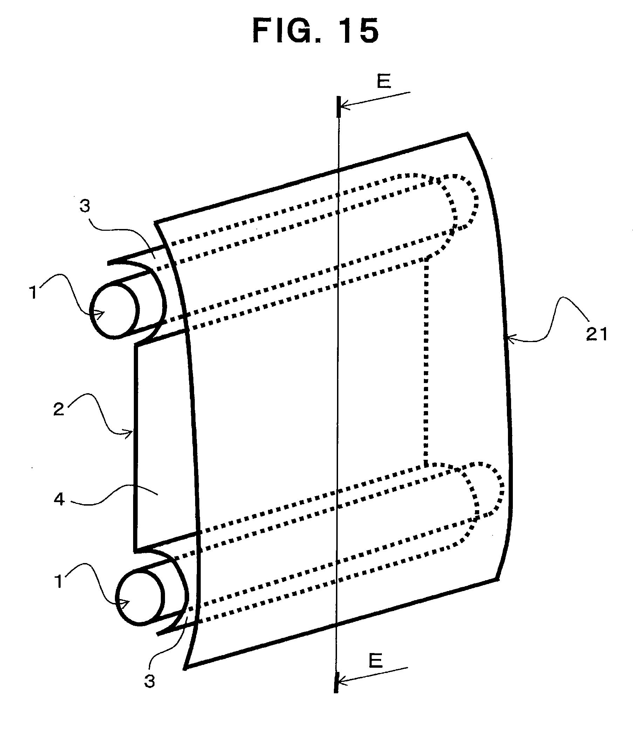

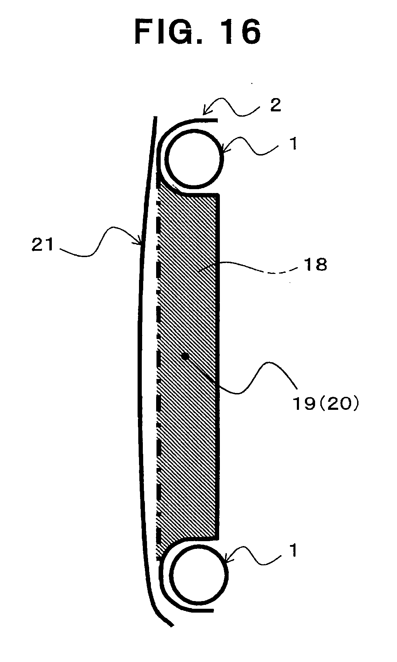

Figs. 15 and 16 show an example in which a cover 21 is added to the structure depicted in Fig. 1. Thus, as needed, it is possible to add cover 21 having an arbitrary shape or structure. Where, because this cover 21 basically does not share the mechanical properties of the whole of the structure, the material and the attachment manner thereof may be appropriately decided. In Fig. 16, in case where rib 19 or stiffener 20 is provided to space 18 defined by joint portion 3 and planar plate portion 4 as shown in Fig. 13 or Fig. 14, the position for the provision thereof is also exemplified.

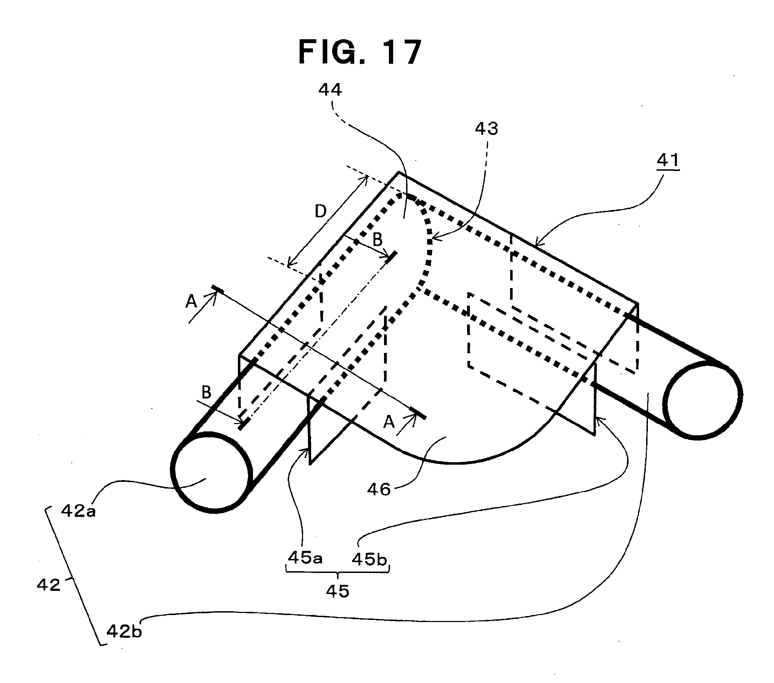

The FRP member according to the present invention can be formed as a corner joint component provided at a corner portion of a frame structure having a frame joint end at which frames are joined to each other. For example, Fig. 17 shows a corner joint component as an FRP member according to an embodiment of the present invention, and shows, for example, an example of a corner joint component provided at a corner portion of a vehicle frame structure. In Fig. 17, symbol 41 indicates the whole of a corner joint component as an FRP member, and the corner joint component 41 is provided at a corner portion 44 having a frame joint end 43 at which frames 42 are joined to each other. Corner joint component 41 has joint portions 45 (45a, 45b) joined respectively to at least two frames 42, which are joined to each other, by adhesion at positions each distanced (for example, distance D in Fig. 17) from frame joint end 43, and a planar plate portion 46 extending in a planar fashion from respective joint portions 45a, 45b, and the joint portions 45a, 45b and the planar plate portion 46 are integrally molded to form the FRP member.

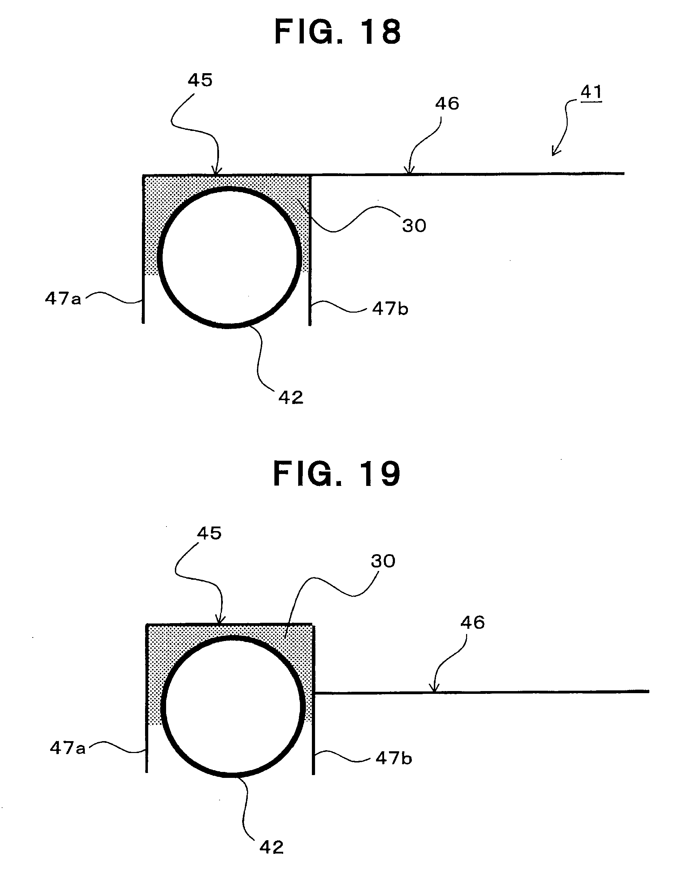

As shown in Fig. 18, each joint portion 45 has standing walls 47a, 47b extending in parallel to each other at both sides of each frame 42 at a condition where corner joint component 41 is provided at the above-described corner portion 44, and the standing walls 47a, 47b extend in parallel to each other in the insertion direction when the corner joint component 41 is inserted and attached to the corner portion of the frame structure as described later. Such a joint portion 45 is joined to frame 42 via adhesive 30.

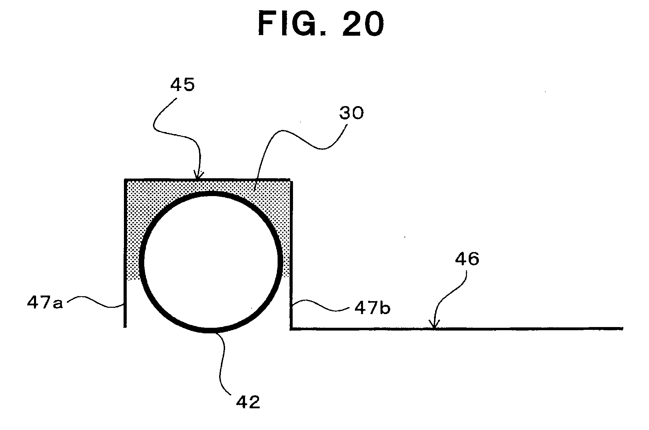

The connection structure of the above-described joint portion 45 and planar plate portion 46 can also be formed as shown in Figs. 19 and 20 except the structure shown in Fig. 18. Namely, as shown in Fig. 19, planar plate portion 46 can also be connected to a middle position of standing wall 47 b in its extension direction, and as shown in Fig. 20, the planar plate portion 46 can also be connected to a tip position of the standing wall 47 b in its extension direction.

In the above-described embodiment, as aforementioned, by joining corner joint component 41 comprising an integrally molded FRP member to corner portion 44 of the frame structure having frame joint end 43 via adhesive 30, it becomes possible to reinforce and stiffen, in particular, joint portion 45 by the shear stress of the adhesion surface due to the adhesion and the planar structure portion of planar plate portion 46 by the shear stiffening structure in plane, respectively. In particular, by joining joint portion 45 at a position distanced from frame joint end 43, the adhesion joining of the joint portion 45 can be facilitated, and by the cooperation of the joint portion 45 and planar plate portion 46, an excellent reinforcement and stiffening structure against a shear deformation can be realized. Further, because corner joint component 41 is formed as an FRP member, such an excellent reinforcement and stiffening structure can be realized without accompanying a great increase of weight.

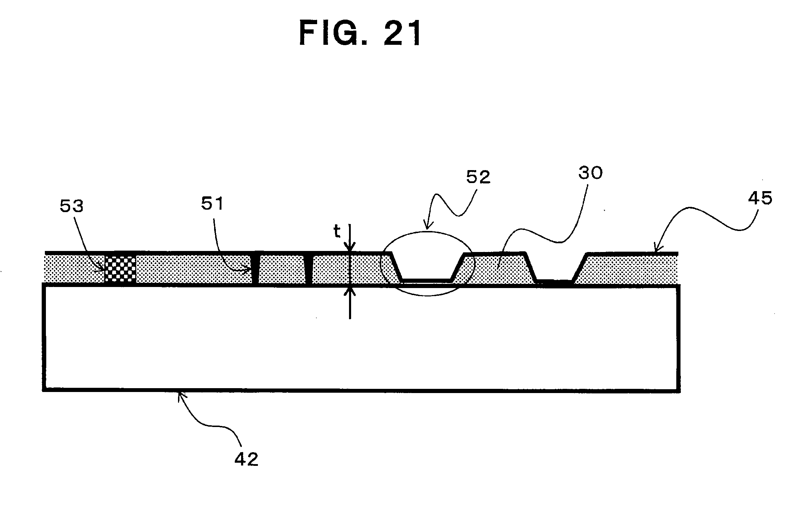

Fig. 21 shows an example of the structure of the joint portion in the structure depicted in Fig. 17 as viewed along the line B-B of Fig. 17. In the example shown in the figure, similarly to the example shown in the aforementioned Fig. 9, to the frame 42 side of joint portion 45 of the corner joint component comprising an FRP member, provided are a rib 51 as an abutted portion for regulating the coating thickness of the adhesive, and a seat 52 projected in a convex shape toward the frame 42 so as to be able to come into contact with the frame 42, and further, a spacer 53 as a separate component between the joint portion 45 and the frame 42, and the gap between the member and the frame 42 can be regulated via these rib 51, seat 52 and spacer 53. In such a structure, by regulating the gap between the member and the frame 42 via rib 51, seat 52 and spacer 53, it becomes possible to regulate the coating thickness "t" of adhesive 30 at a desirable coating thickness, and while a predetermined adhesion strength is ensured, the amount of used adhesive can be suppressed.

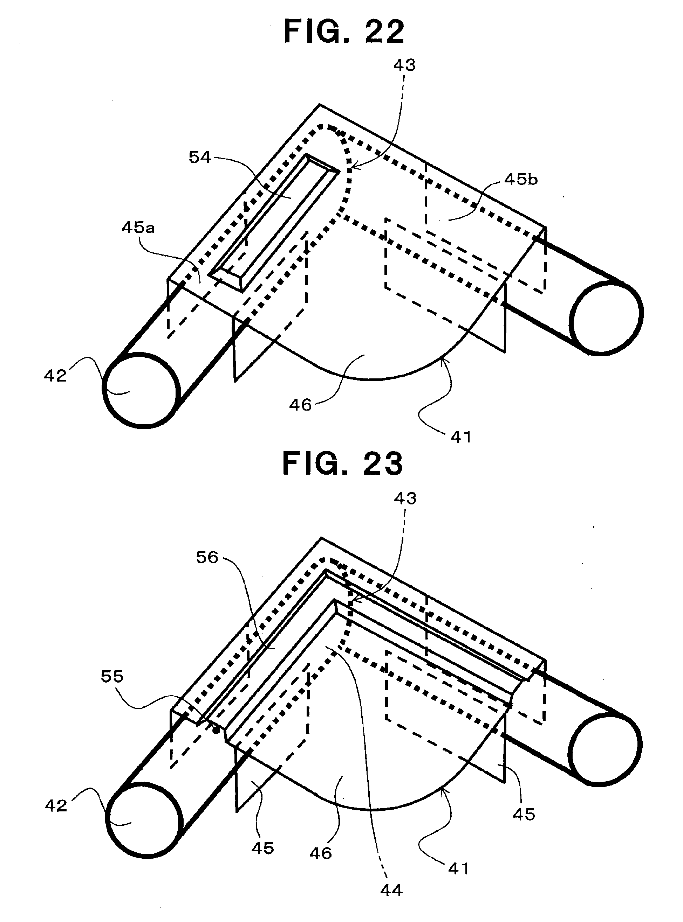

Fig. 22 shows an example providing a groove to the structure depicted in Fig. 17. In the example shown in the figure, a groove 54 depressed in a concave-like shape capable of holding an adhesive is provided to one joint portion 45a or a surface facing the joint portion 45a and frame 42 present near there. In such a structure, because an adequate amount of adhesive can be held in groove 54, an adhesion strength of a desirable level or more can be easily ensured relatively to the adhesion part.

Fig. 23 shows an example providing an injection path and a filling path to the structure depicted in Fig. 17. In the example shown in the figure, a filling path 56 for adhesive, which is formed as a groove extending along corner portion 44 and depressed in a concave-like shape capable of holding an adhesive, is provided to a surface facing frame 42 at a part including joint portion 45, and by opening the filling path 56 at its end, an injection path 55 for adhesive is formed. In such a structure, an adhesive can be easily injected and filled relatively to a part to be supplied with the adhesive, and a desirable joint state can be obtained more easily and more securely. Further, by the condition where filling path 56 for adhesive extends along corner portion 44, for example, the adhesive injected from one injection path 55 can be easily delivered adequately up to a required part, and a desirable joint state of corner joint component 41 can be obtained easily and securely.

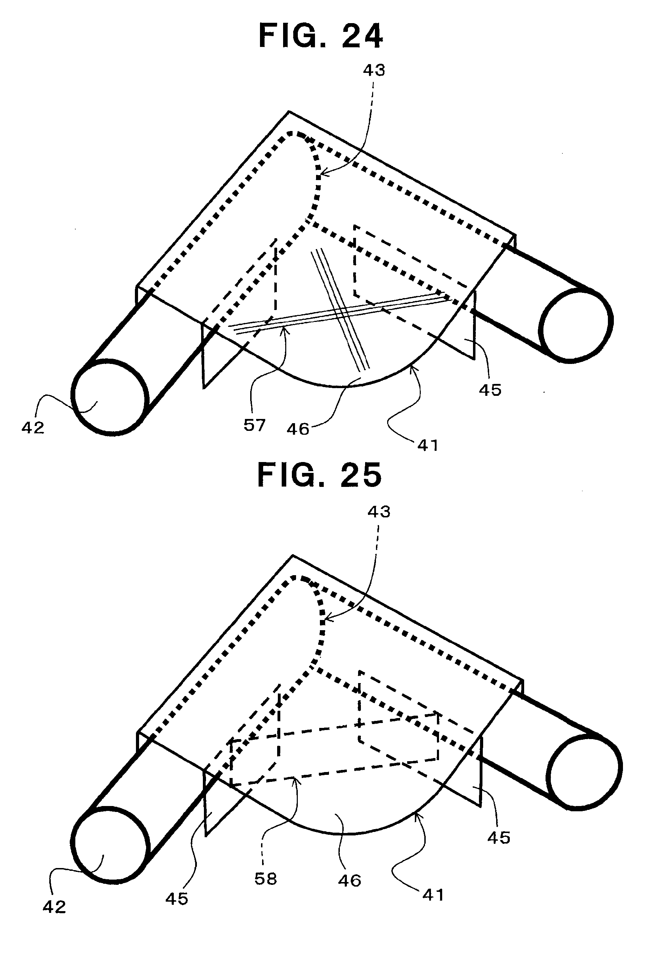

Fig. 24 shows an example of orientation of reinforcing fibers 57 in planar plate portion 46 of corner joint component 41 comprising an FRP member. As shown in the figure, in the FRP at planar plate portion 46, it is preferred that reinforcing fibers 57 are oriented at least in ±45° directions relative to a reference direction (for example, an extension direction of frame 42). Since it is desired to efficiently receive, in particular, a shear load by planar plate portion 46, by employing such a structure, the shear strength in plane in the planar plate portion 46 can be efficiently enhanced, and a desirable shear stiffening structure in plane can be obtained.

Fig. 25 shows an example providing a rib 58 to corner joint component 41 comprising an FRP member. Rib 58 is provided, for example, so as to extend between both joint portions 45, in particular, between the standing walls thereof, and so as to extend obliquely on planar plate portion 46, and in the example shown in the figure, it is formed integrally with the FRP member forming corner joint component 41. Since such a rib 58 can be contained substantially within the installation space of corner joint component 41, the mechanical properties of the corner joint component 41 can be further enhanced efficiently without greatly increasing the installation space.

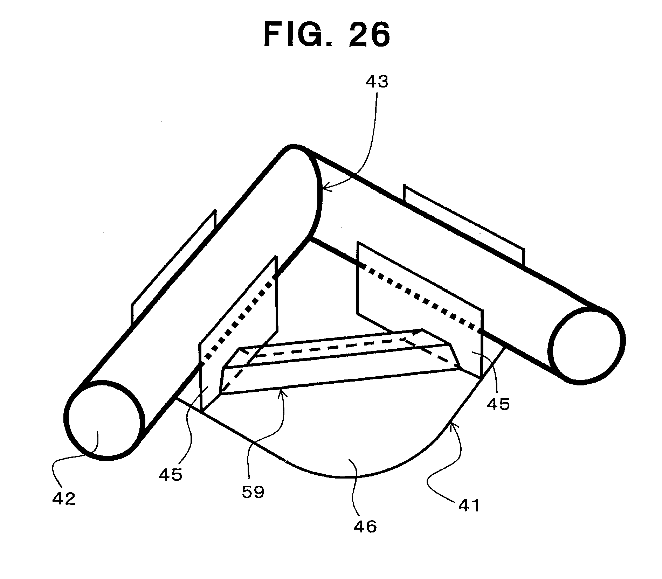

Fig. 26 shows an example providing a stiffener 59 to corner joint component 41 comprising an FRP member instead of rib shown in Fig. 25. Fig. 26 is viewed from the back surface side relatively to the view direction of Fig. 25. Stiffener 59 is provided, for example, so as to extend between both joint portions 45, in particular, between the standing walls thereof, and so as to extend obliquely on planar plate portion 46, and in the example shown in the figure, it is formed integrally with the FRP member forming corner joint component 41. Since such a stiffener 59 also can be contained substantially within the installation space of corner joint component 41, the mechanical properties of the corner joint component 41 can be further enhanced efficiently without greatly increasing the installation space.

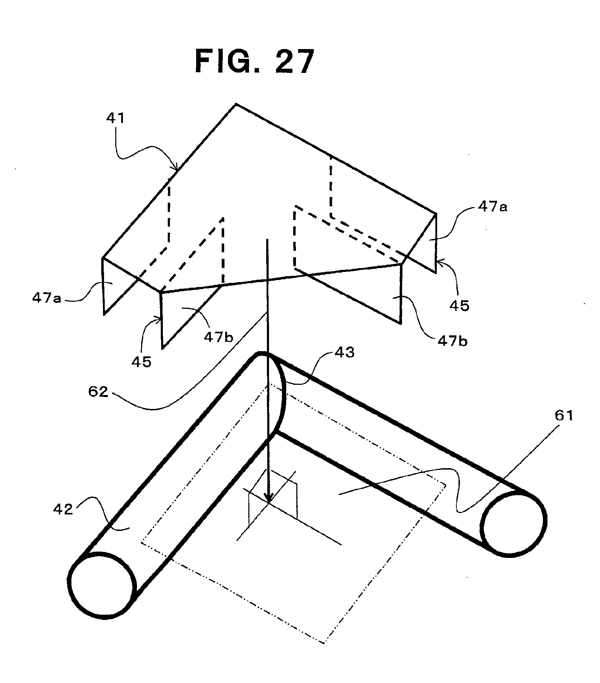

Fig. 27 shows an example of an insertion/attachment structure of a corner joint component, and substantially shows the insertion/attachment structure of corner joint component 41 depicted in Fig. 17 to frame 42. Corner joint component 41 is attached at a predetermined position of the corner portion by being inserted in a joint component insertion direction 62 shown by the arrow relatively to a surface 61 (a hypothetical surface) formed by two frames 42 joined at frame joint end 43. In particular, by the condition where standing walls 47a, 47b of both joint portions 45 are provided so as to stand in parallel in this joint component insertion direction 62, corner joint component 41 can be attached and set at a predetermined position extremely easily merely by inserting (attaching) it in this direction.

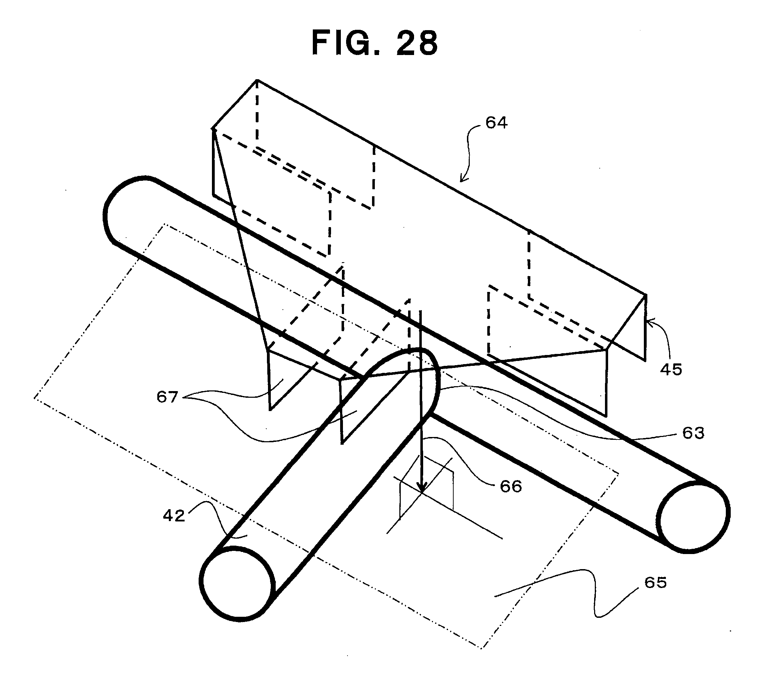

Fig. 28 shows another example of an insertion/attachment structure of a corner joint component. In this example, a corner portion having a frame joint end 63, at which frames 42 are joined in a T-shaped form, is formed, and relatively to the corner portion, a corner joint component 64 having joint portions 45 at three locations corresponding to the respective frame portions is joined. Corner joint component 64 is attached at a predetermined position of the corner portion by being inserted in a joint component insertion direction 66 shown by the arrow relatively to a surface 65 (a hypothetical surface) formed by frames 42 extending in three directions and joined at frame joint end 63. In particular, by the condition where standing walls 67 of joint portions 45 provided at three locations are provided so as to stand in parallel in this joint component insertion direction 66, corner joint component 64 can be attached and set at a predetermined position extremely easily merely by inserting (attaching) it in this direction.

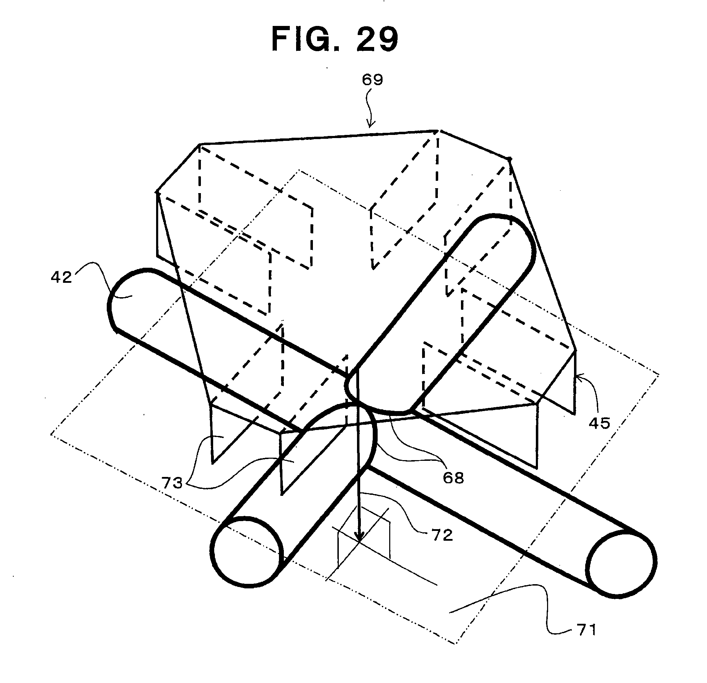

Fig. 29 shows a further example of an insertion/attachment structure of a corner joint component. In this example, a corner portion having a frame joint end 68, at which frames 42 are joined in a cross-shaped form, is formed, and relatively to the corner portion, a corner joint component 69 having joint portions 45 at four locations corresponding to the respective frame portions is joined. Corner joint component 69 is attached at a predetermined position of the corner portion by being inserted in a joint component insertion direction 72 shown by the arrow relatively to a surface 71 (a hypothetical surface) formed by frames 42 extending in four directions and joined at frame joint end 68. In particular, by the condition where standing walls 73 of joint portions 45 provided at four locations are provided so as to stand in parallel in this joint component insertion direction 72, corner joint component 69 can be attached and set at a predetermined position extremely easily merely by inserting (attaching) it in this direction.

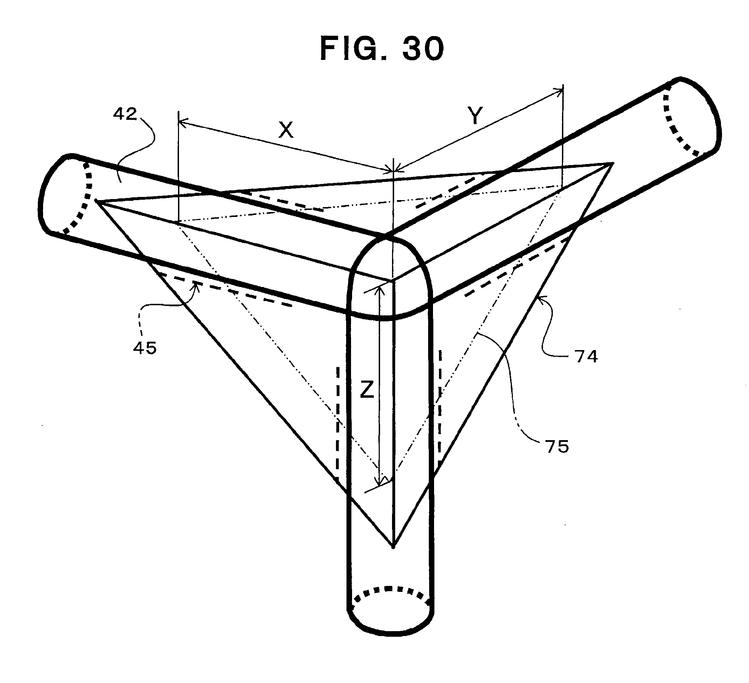

Although all the above-described Figs. 27 to 29 show embodiments each in which respective frames joined at the corner portion extend on a two-dimensional plane, the present invention can also be applied to a case where respective frames extending in three-dimensional directions are joined. For example, as shown in Fig. 30, even in case where a corner portion is formed by joining respective frames 42 extending in three-dimensional directions of X, Y and Z directions, when a corner joint component 74 is inserted in the direction of a three-dimensional plane 75 (hypothetical plane) formed by the respective frames 42, by providing the standing walls of the respective joint portions 45 in parallel to this corner joint component insertion direction, the corner joint component 74 can be attached and installed to a predetermined position extremely easily merely by being inserted (installed) in this direction, and it also can contribute to improve the productivity.

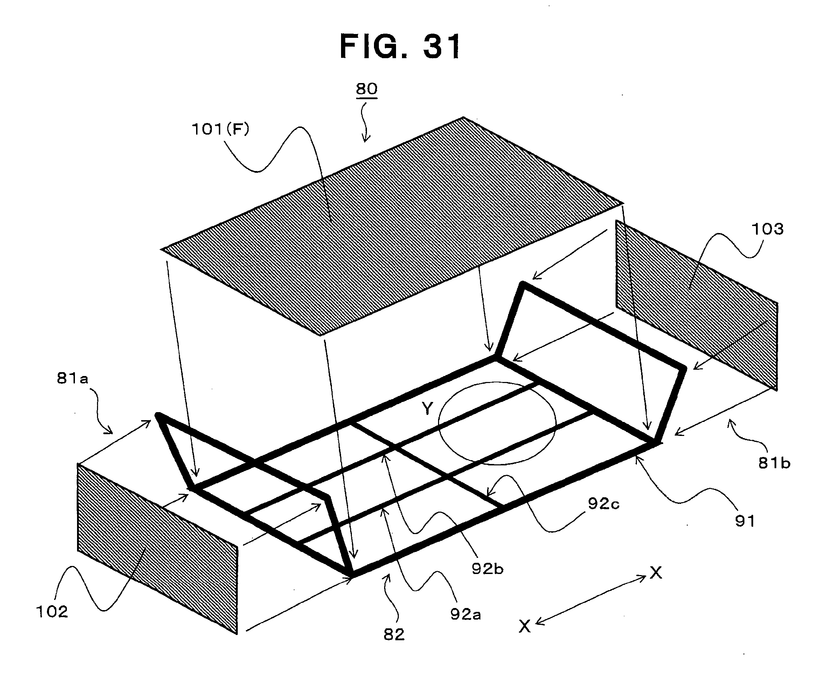

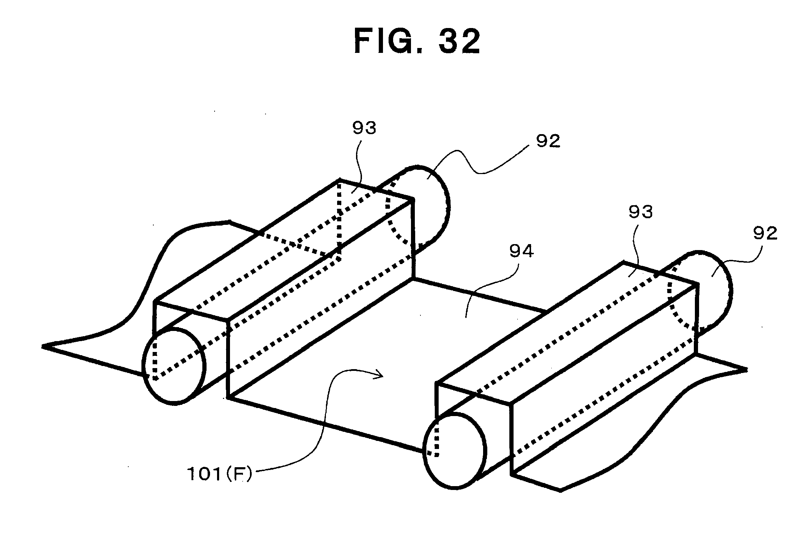

Further, the FRP member according to the present invention can be applied also to a floor structure. For example, Fig. 31 shows a floor structure capable of using an FRP member according to an embodiment of the present invention, and specifically, shows a floor structure for a vehicle in which the direction X-X is the front-rear direction. In Fig. 31, symbol 80 indicates the whole of the floor structure, and the floor structure 80 is formed as a structure comprising front and rear standing wall portions 81a, 81b and a floor portion 82 connecting them. This floor structure 80 has an outline frame 91 at a portion for forming the outline of the entire structure and has lattice frames 92 (92a, 92b, 92c) formed as approximately lattice-like shapes inside the outline frame 91 at least at the above-described floor portion 82. A floor panel 101 is disposed at floor portion 82, a dash panel 102 is disposed at front standing wall portion 81a, and a rear panel 103 is disposed at rear standing wall portion 81b, respectively. In this floor structure 80, a panel-like FRP member is joined to at least one frame of the above-described outline frame 91 and lattice frames 92. In the example shown in Fig. 31, for example, at least a part of at least the above-described floor panel 101 is formed as an FRP member F. As exemplified in Fig. 32, this FRP member F extends, for example, along the outer circumferential surface of the above-described at least one frame having a circular cross-sectional shape (in the figure, although it is shown as lattice frames 92, it may be outline frame 91 and may be both thereof.), and it is formed as one molded integrally with a joint portion 93 joined to frame 92 by adhesion using an adhesive (for example, the aforementioned adhesive 30) and a planar plate portion 94 extending in a planar fashion from the joint portion 93, in the example shown in the figure, having a part extending between two joint portions 93.

In such an embodiment, as aforementioned, since joint portion 93 having a shape, for example, extending along the outer circumferential surface of frame 92 is joined to the frame 92 by adhesion, as compared with a conventional case of being joined by spot welding, etc., it becomes possible to be easily joined, the number of assembly can be reduced, and a floor structure for generalized vehicles capable of being developed to a wide variety of vehicles can be obtained at a small initial cost for investment. Further, since it becomes possible to join a portion to be joined over the entire surface, an extremely high joint strength can be achieved. Further, by the structure where joint portion 93 joined to frame 92 is formed in a cross-sectional shape surrounding the outer circumferential surface of the frame 92, the joint portion 93 can easily have a stiffener function relatively to the frame 92. Therefore, it becomes possible that joint portion 93 is joined to frame 92 strongly and supports planar plate portion 94, which extends in a planar fashion from this joint portion 93 and which is molded integrally with the joint portion 93, strongly, and in addition, a load from the joint portion 93 can be transmitted securely to the planar plate portion 94. This planar plate portion 94 extending in a planar fashion can exhibit high strength and rigidity relatively to a load transmitted from the frame of floor structure 80 (for example, from frame 92) through joint portion 93, in particular, relatively to flexural load or shear load. Therefore, at the formation where FRP member is joined, while the lightness in weight of the entire floor structure 80 can be secured adequately, it becomes possible to efficiently enhance mechanical properties such as strength and rigidity against flexural deformation or shear deformation.

In the above-described floor structure 80, with respect to the structure for providing a stiffener to the joint portion and the like, the structure for introducing an adhesive and the structure for controlling the coating thickness of an adhesive, structures similar to those shown in the aforementioned Figs. 6 to 11 can be employed.

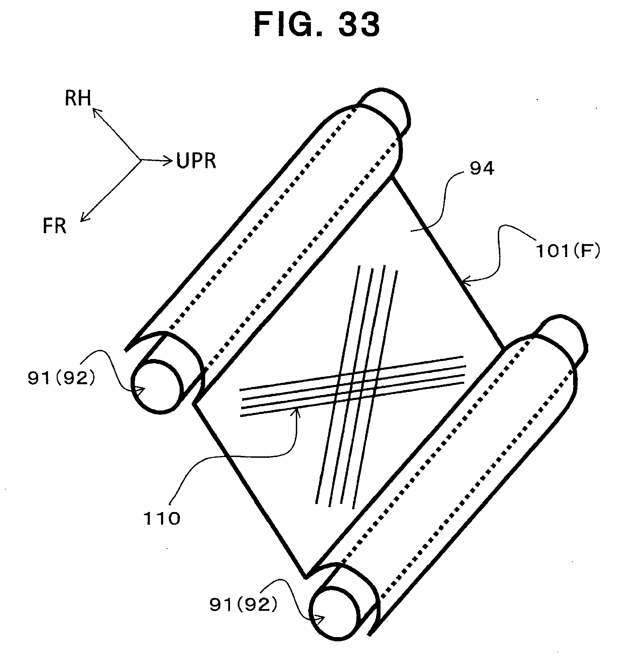

Fig. 33 shows an example of orientation of reinforcing fibers 110 in planar plate portion 94 of FRP member F joined to frame 91 (or 92) of floor structure 80. As shown in the figure, in the FRP in planar plate portion 94, it is preferred that reinforcing fibers 110 are oriented at least in ±45° directions relative to a reference direction (direction FR in the figure (direction toward front standing wall 81 a) or direction RH (direction toward right side)). Where, direction UPR in the figure indicates a direction toward upper side (hereinafter, same). Since in planar plate portion 94 it is desired in particular to efficiently take charge of shear load, by employing such a structure, the shear strength in plane in the planar plate portion 94 can be efficiently enhanced, and a desirable shear stiffening structure in plane can be obtained.

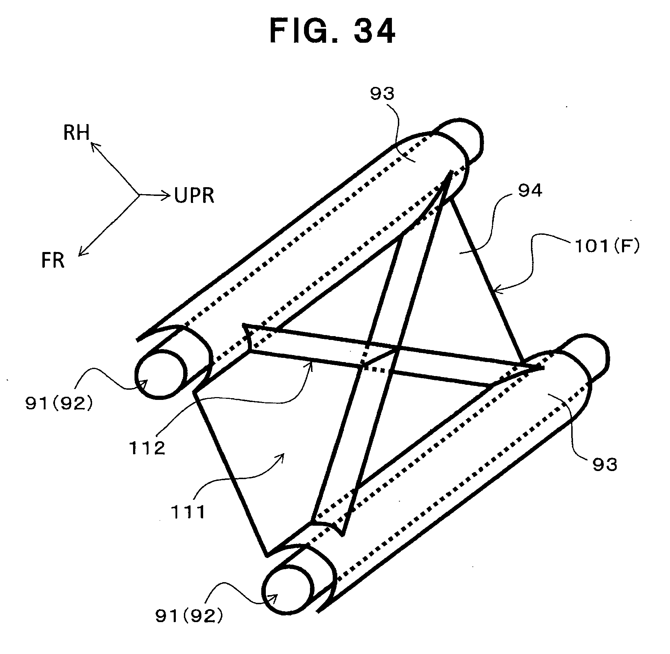

Fig. 34 shows an example of a case where in FRP member F of floor structure 80, a rib 112 is provided in particular in a space 111 defined by joint portions 93 and planar plate portion 94. Rib 112 is provided, for example, at a condition being crossed in approximately ±45° directions, and molded integrally with FRP member F. In such a structure, the strength and the rigidity, in particular, of planar plate portion 94 are further enhanced by rib 112, and by adequately setting the extension direction of rib 112, the shear stiffening property in plane is further enhanced. Further, since it is possible to contain rib 112 within the installation space of FRP member F by providing the rib 112 in space 111 defined by joint portions 93 and planar plate portion 94, desired mechanical properties can be enhanced efficiently without increasing the installation space remarkably.

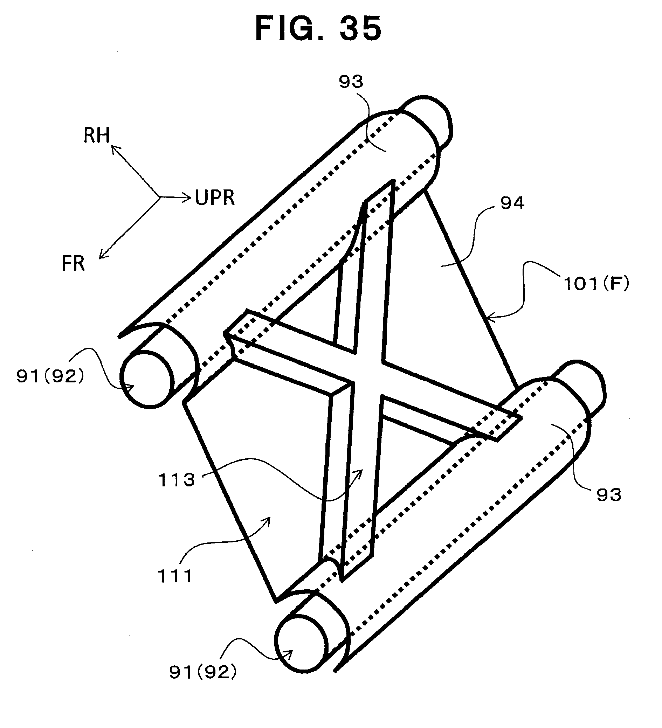

Fig. 35 shows an example of a case where similarly to the example shown in Fig. 34, in FRP member F of floor structure 80, a stiffener 113 is provided in particular in space 111 defined by joint portions 93 and planar plate portion 94. Stiffener 113 is provided, for example, at a condition being crossed in approximately ±45° directions, and molded integrally with FRP member F. Also in such a structure, the strength and the rigidity, in particular, of planar plate portion 94 are further enhanced by stiffener 113, and by adequately setting the extension direction of stiffener 113, the shear stiffening property in plane is further enhanced. Further, since it is possible to contain stiffener 113 within the installation space of FRP member F by providing the stiffener 113 in space 111 defined by joint portions 93 and planar plate portion 94, desired mechanical properties can be enhanced efficiently without increasing the installation space remarkably.

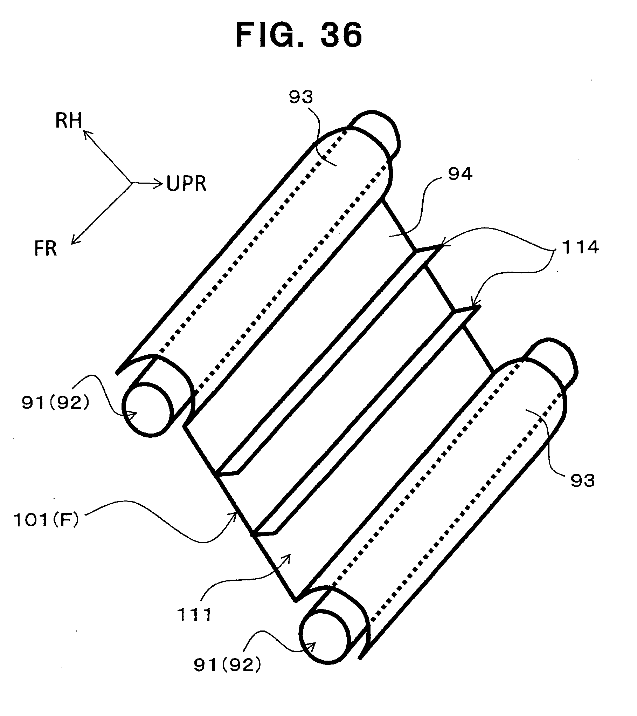

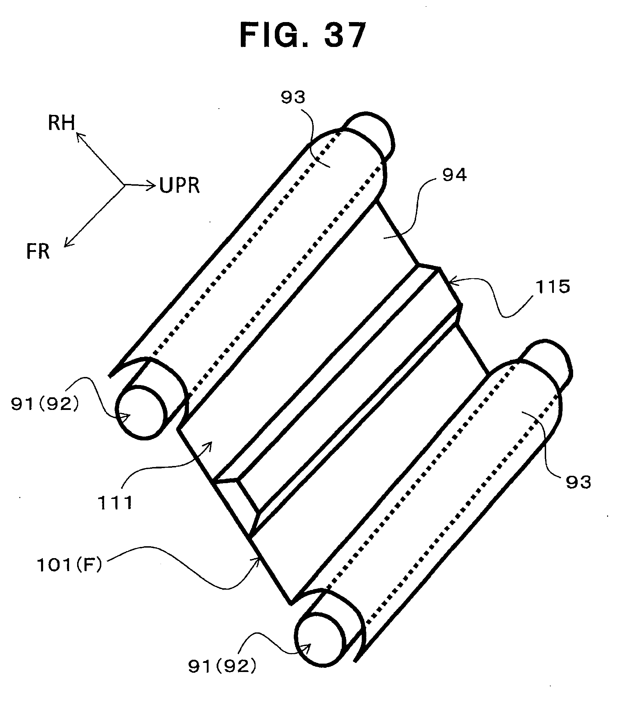

Figs. 36 and 37 show examples each changed with the extension direction of a rib 114 or a stiffener 115 as compared with the structure shown in Fig. 34 or 35, and the rib 114 or the stiffener 115 is extended in a direction along the direction connecting the front and rear standing wall portions. In such a structure, in particular, the flexural stiffness in the front-rear direction of the structure can be stiffened. In accordance with the properties required for portions desired with reinforcement and stiffening, a structure shown in Fig. 34 or Fig. 35 or a structure shown in Fig. 36 or Fig. 37, or a structure combined thereof, may be selected appropriately.

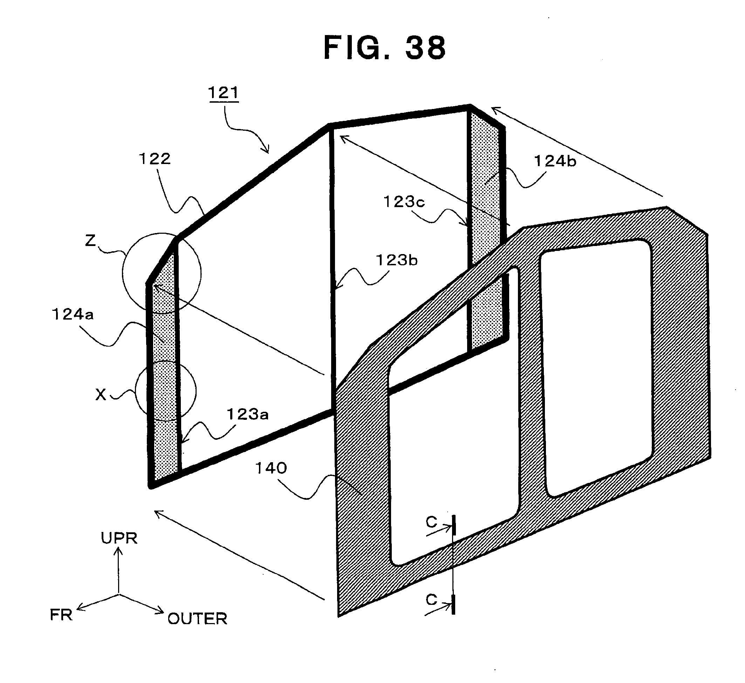

Furthermore, the FRP member according to the present invention can be applied also to a vehicle side panel structure. For example, Fig. 38 shows a vehicle side panel structure capable of using an FRP member according to an embodiment of the present invention, and in the figure, "UPR" indicates an upward direction of a vehicle, "FR" indicates a front direction of the vehicle, and "OUTER" indicates an outer side direction of the vehicle, respectively. In a vehicle side panel structure 121, the frame portion thereof comprises an outline frame 122 provided at the part forming the outline of the whole of the structure, and vertical frames 123a, 123b and 123c provided at least at three locations of a front side, a central part and a rear side, and panel-like FRP members 124a and 124b are provided, respectively, at the region between the front side vertical frame 123a and the outline frame 122 and at the region between the rear side vertical frame 123c and the outline frame 122. In this embodiment, an outer cover 140 is provided outside vehicle side panel structure 121 thus constructed.

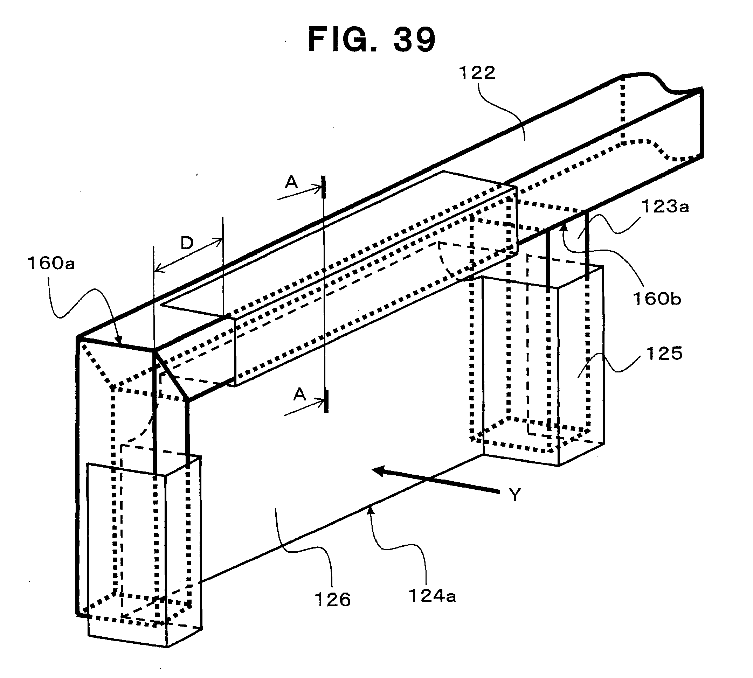

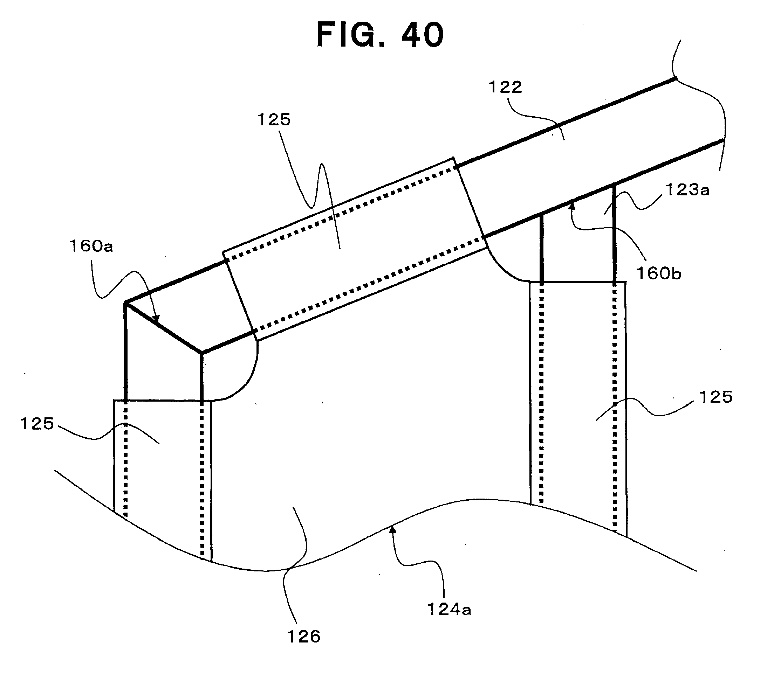

The above-described FRP member is formed, as shown in Fig. 39 with the portion Z of Fig. 38 and as shown in Fig. 40 depicting a partial elevational view as viewed along the arrow Y of Fig. 39 with a part of front side FRP member 124a, as a panel member molded integrally with a joint portion 125 (three joint portions 125 are shown in the figures.), which extends along outline frame 122 and the outer circumferential surface of the front side vertical frame 123a and which is joined to the frames 122 and 123a by adhesion, and a planar plate portion 126 extending in a planar fashion from the joint portion 125. Although omitted to be shown in the figure, rear side FRP member 124b is also formed similarly. In this embodiment, joint portion 125 is provided at a position distanced from joint portions 160a, 160b of outline frame 122 or/and vertical frame 123a (for example, at a position distanced by a distance D).

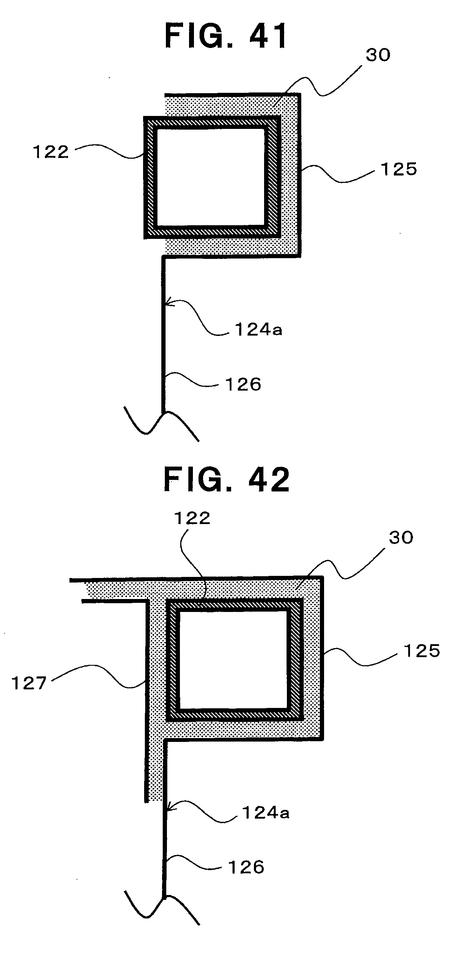

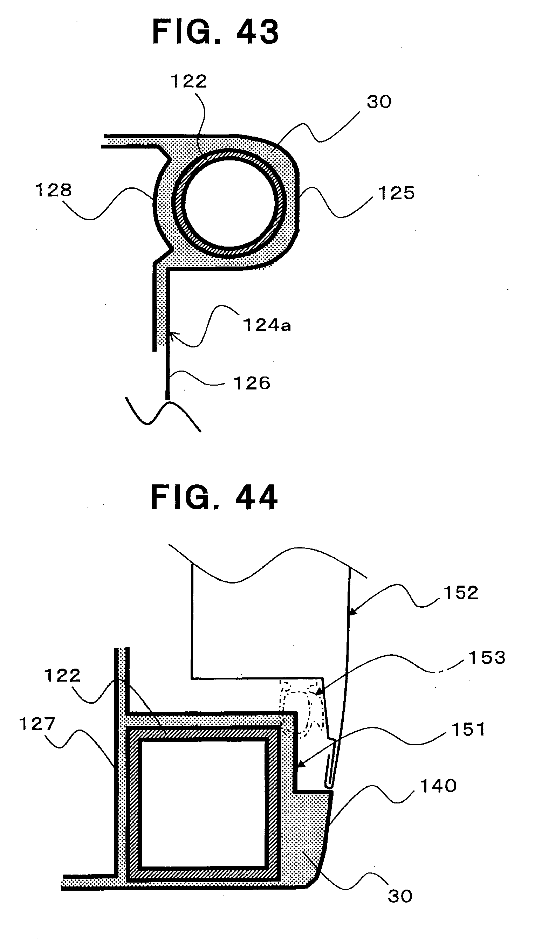

Joint portion 125 of FRP member 124a, for example, as shown in Fig. 41, is joined to frames 122, 123a (in Fig. 41, frame 122 is shown along the section A-A of Fig. 39.) by adhesion via adhesive 30. In the joining by adhesion in this joint portion 125, for example, as shown in Fig. 42, the joining formation may be reinforced by providing a stiffener 127, and further, for example, as shown in Fig. 43, the joining formation may be more optimized by forming a stiffener 128 to be provided as a shape having a portion curved along the shape of the frame.

In the above-described embodiment, as aforementioned, by forming the frame portion by outline frame 122 and vertical frames 123a, 123b and 123c and forming the panel portion as front and rear FRP members 124a and 124b,it becomes possible to burden, for example, mainly the flexural force at the time of a head-on collision or at the time of a side collision to the frame portion and to make the panel portions provided at front and rear locations for forming planar portions support mainly the flexural stiffness and the torsional stiffness of the entire vehicle body, and it becomes possible to enhance the properties of the flexural stiffness and the torsional stiffness as the whole of side panel structure 121. Further, by setting the joint formation of the frame portion and the panel portion at an optimum formation, in particular, by forming FRP members 124a and 124b as the panel members molded integrally with joint portion 125 extending along the outer circumferential surface of the frame and joined to the frame by adhesion and planar plate portion 126 extending in a planar fashion from the joint portion 125, it becomes possible to make the joint of the frame and FRP members 124a and 124b firm, and to promote the lightness in weight of the entire side panel structure while ensuring high strength and rigidity as the whole of side panel structure 121. Further, by employing the joining by adhesion of FRP members 124a and 124b, the assembly steps can be made simple, and it becomes possible to develop this easily and broadly to generalized vehicles. Furthermore, by providing joint portions 125 of FRP members 124a and 124b at positions distanced from a frame joint portion, the frame joint portion, for which joining by adhesion may be sometimes hard, can be intentionally dislocated from an adhesion joint location, the joining by adhesion of the joint portion relative to the frame can be easily carried out, and it becomes possible to make the structure higher in strength and rigidity efficiently with a small amount of material of the FRP members.

In the above-described floor structure 80, with respect to the structure for providing a stiffener to the joint portion and the like, the structure for introducing an adhesive, the structure for controlling the coating thickness of an adhesive, etc., structures similar to those shown in the aforementioned Figs. 6 to 11 can be employed.

Fig. 44 shows an example of the structure part as viewed along the line C-C of Fig. 38. In the example shown in the figure, an outer cover 140 is joined to outline frame 122 via adhesive 30, and stiffener 127 is provided inside for reinforcement. A part of outer cover 140 is formed as a seal surface 151, and relatively to this seal surface 151, a side door 152 is provided at a condition of being interposed with a seal 153 therebetween. Thus, it is possible to form a seal surface relatively to side door 152 and the like. It is possible to provide the seal surface to the FRP member as needed.

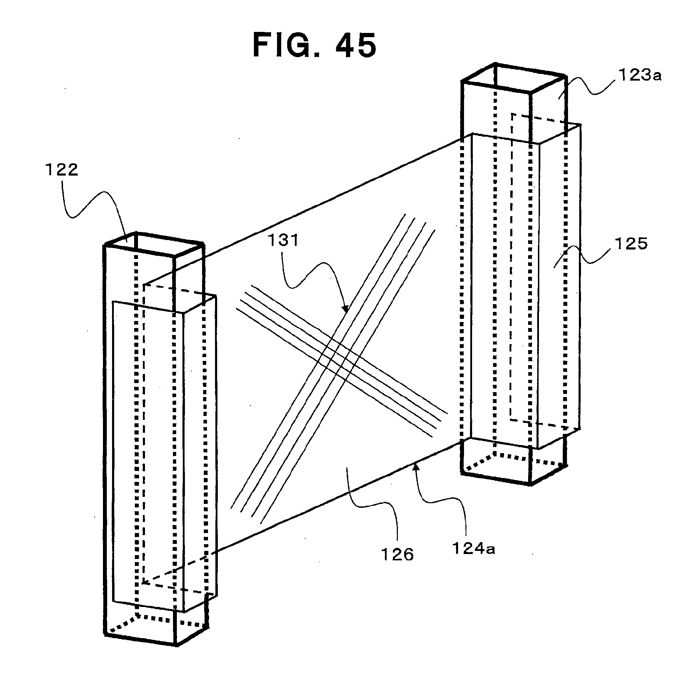

Fig. 45 shows an example of orientation of reinforcing fibers of an FRP member. For example, it shows as a part corresponding to the part X of Fig. 38, and shows an example of orientation of reinforcing fibers 131 in planar plate portion 126 of FRP member 124a. As shown in the figure, in the FRP of planar plate portion 126, it is preferred that reinforcing fibers 131 are oriented at least in ±45° directions relative to a reference direction (for example, a direction for connecting frames 122 and 123a). By employing such a structure, the shear strength in plane of planar plate portion 126 can be enhanced efficiently, thereby obtaining a structure having a desirable shear stiffening property in plane.

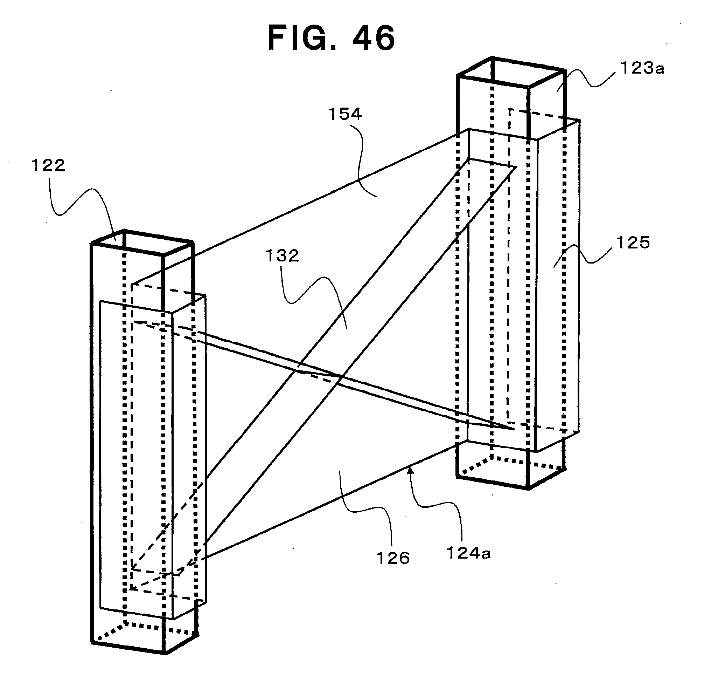

Fig. 46 shows an example of a case of, in particular, providing a rib 132 in a space 154 defined by joint portion 125 and planar plate portion 126. Rib 132 is provided, for example, at a condition of being crossed in ±45° directions, and molded integrally with FRP member 124a. In such a structure, the strength and the rigidity of, in particular, planar plate portion 126 can be further enhanced by rib 132, and by adequately setting the extension direction of the rib 132, the shear stiffening property in plane can be further enhanced. Further, by providing rib 132 in space 154 defined by joint portion 125 and planar plate portion 126, because it is possible to be contained within the installation space of FRP member 124a, the desired mechanical properties can be enhanced efficiently without remarkably increasing the installation space.

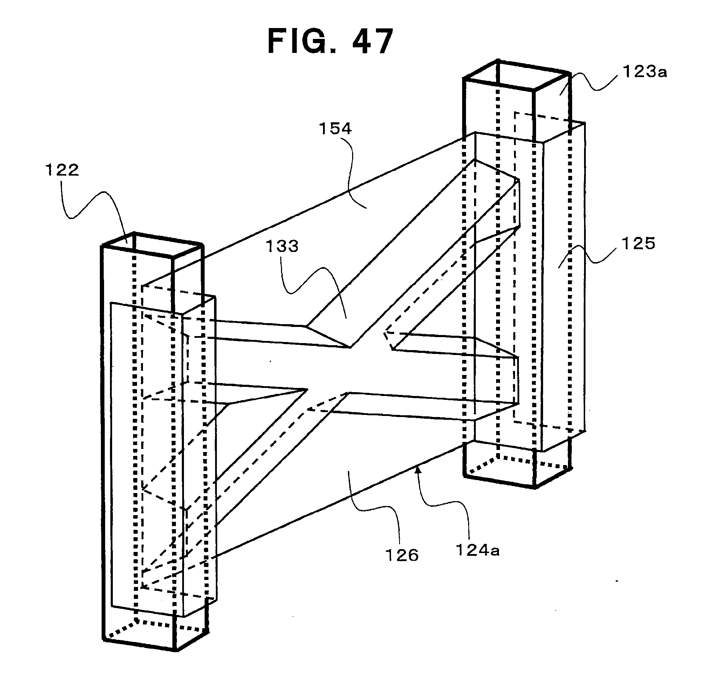

Similarly to that shown in Fig. 46, Fig. 47 shows an example of a case of, in particular, providing a stiffener 133 in space 154 defined by joint portion 125 and planar plate portion 126. Stiffener 133 is provided, for example, at a condition of being crossed in ±45° directions, and molded integrally with FRP member 124a. Also in such a structure, the strength and the rigidity of, in particular, planar plate portion 126 can be further enhanced by stiffener 133, and by adequately setting the extension direction of the stiffener 133, the shear stiffening property in plane can be further enhanced. Further, by providing stiffener 133 in space 154 defined by joint portion 125 and planar plate portion 126, because it is possible to be contained within the installation space of FRP member 124a, the desired mechanical properties can be enhanced efficiently without remarkably increasing the installation space. In accordance with the required properties of a part desired with reinforcement or stiffening, the structure shown in Fig. 46 or Fig. 47, and further, a structure combined thereof, may be selected appropriately. Further, it is also possible that the above-described rib 132 or stiffener 133 forms a support surface for an external component.

### Industrial Applicability

The FRP member according to the present invention can be applied to frame structures in various fields, and in particular, it is suitable for use in a vehicle frame structure.

### Explanation of symbols

1: frame of frame structure
2: FRP member
3: joint portion
4: planar plate portion
5: corner portion
6, 7: stiffener
8: joint portion
9, 10: stiffener
11: rib
12: seat
13: spacer
14: groove
15: injection path
16: filling path
17: reinforcing fiber
18: space defined by joint portion and planar plate portion
19: rib
20: stiffener
21: cover
30: adhesive
41, 64, 69, 74: corner joint component comprising FRP member
42, 42a, 42b: frame
43, 63, 68: frame joint end
44: corner portion
45, 45a, 45b: joint portion
46: planar plate portion
47a, 47b, 67, 73: standing wall portion
51: rib
52: seat
53: spacer
54: groove
55: injection path
56: filling path
57: reinforcing fiber
58: rib
59: stiffener
61, 65, 71, 75: surface formed by frame
62, 66, 72: joint component insertion direction
80: floor structure
81a, 81b: standing wall portion
82: floor portion
F: FRP member
91: outline frame
92, 92a, 92b, 92c: lattice frame
93: joint portion
94: planar plate portion
101: floor panel
102: dash panel
103: rear panel
110: reinforcing fiber
111: space defined by joint portion and planar plate portion
112, 114: rib
113, 115: stiffener
121: vehicle side panel structure
122: outline frame
123a, 123b, 123c: vertical frame
124a, 124b: FRP member
125: joint portion
126: planar plate portion
127, 132: stiffener
131: reinforcing fiber
133: rib
140: outer cover
151: seal surface
152: side door
153: seal
154: space defined by joint portion and planar plate portion
160a, 160b: joint portion

## Claims

1. An FRP member joined to a frame of a frame structure, **characterized in that** a joint portion extending along an external peripheral surface of said frame and joined to said frame by adhesion, and a planar plate portion extending in a planar fashion from said joint portion, are integrally molded.

2. The FRP member according to claim 1, wherein a space is defined by said joint portion and said planar plate portion.

3. The FRP member according to claim 1 or 2, wherein said joint portion has a stiffener function for reinforcing said frame, or/and, has a stiffener component for reinforcing said frame.

4. The FRP member according to any of claims 1 to 3, wherein at least a part of an outer surface of said FRP member is formed as a flat portion.

5. The FRP member according to any of claims 1 to 4, wherein an abutting portion for regulating a coating thickness of an adhesive provided to said joint portion is provided to said joint portion or a part covering said joint portion.

6. The FRP member according to any of claims 1 to 5, wherein a groove capable of holding an adhesive is provided to said joint portion.

7. The FRP member according to any of claims 1 to 6, wherein at least any one of an injection path and a filling path for an adhesive is provided to said joint portion.

8. The FRP member according to any of claims 1 to 7, wherein reinforcing fibers of an FRP in said planar plate portion are oriented at least in ±45° directions relative to a reference direction.

9. The FRP member according to any of claims 1 to 8, wherein a rib or/and a stiffener are integrally provided to said planar plate portion or said planar plate portion and said joint portion.

10. The FRP member according to claim 9, wherein said rib or/and said stiffener form a support surface for an external component.

11. The FRP member according to any of claims 1 to 10, wherein carbon fibers are used as reinforcing fibers of an FRP forming said FRP member.

12. The FRP member according to any of claims 1 to 11, wherein said FRP member is formed as a corner joint component provided at a corner portion of a frame structure having a frame joint end at which said frames are joined to each other, said FRP member has joint portions joined respectively to at least two frames, joined to each other, by adhesion at positions each distanced from said frame joint end and a planar plate portion extending in a planar fashion from respective joint portions, and said joint portions and said planar plate portion are formed by integral molding.

13. The FRP member according to claim 12, wherein each of said joint portions has standing walls extending in parallel to each other at both sides of each of said frames at a condition where said FRP member is provided at said corner portion.

14. The FRP member according to claim 12 or 13, wherein said planar plate portion has at least a function for stiffening said corner portion.

15. The FRP member according to any of claims 1 to 14, wherein said frame structure is a vehicle frame structure.
